# EUROPÄISCHE PATENTANMELDUNG

(11) **EP 3 438 059 A1**
(43) Veröffentlichungstag der Anmeldung: **06.02.2019**
(21) Anmeldenummer: 18186604.7
(22) Anmeldetag: 31.07.2018
(51) Int. Cl.: C02F 3/06, C02F 3/30, A01K 63/04

(54) **BETRIEBSVERFAHREN VON NITRIFIKATIONBIOFILTERN BEI DER AUFZUCHT VON WASSERORGANISMEN IN GESCHLOSSENEN WASSERVERSORGUNGSANLAGEN**

(30) Priorität: 31.07.2017 RU 2017127284
(71) Anmelder: Kitashin, Jurii, 140003 Lubertsy (RU); Dubrovin, Evgeny, 123056 Moskau (RU)
(72) Erfinder: Kitashin, Jurii, 140003 Lubertsy (RU); Dubrovin, Evgeny, 123056 Moskau (RU)
(74) Vertreter: Jeck, Anton

(57) **Zusammenfassung**

Die Erfindung gehört zum Bereich der Landeskultur und kann in Anlagen der geschlossenen Wasserversorgung verwendet werden, die für die Aufzucht von Wasserorganismen bestimmt sind. Das zu erwartende technische Ergebnis bei der Verwendung der Anlage mit einem geschlossenen Zyklus der Wasserversorgung des vorgeschlagenen Verfahrens besteht in der Anwuchserhöhung der Biomasse der aufgezüchteten Wasserorganismen. Das Betriebsverfahren eines Nitrifikationsbiofilters bei der Aufzucht dieser Wasserorganismen in dieser Anlage enthält eine Zufuhr in einen Nitrifikationsbiofilter aus einem Becken mit den Wasserorganismen nach der mechanischen Filterung von biologisch zu reinigendem Wasser mit einer Geschwindigkeit von 3 - 28 m³/h durch 1 m³ eines Ansatzes des Biofilters, ferner einen Ablauf vom Eingang oder Ausgang des Nitrifikationsbiofilters von einem Teil des biologisch zu reinigenden Wasservolumens und eine Hinzufügung von Frischwasser in das Becken mit den Wasserorganismen, das dem abgeleiteten gleich ist. Ferner ermöglicht das Betriebsverfahren des Nitrifikationsbiofilters, dass der Ablauf vom Eingang oder Ausgang des Nitrifikationsbiofilters erfolgt und dass ein Teil des biologisch zu reinigenden Wasservolumens im Laufe von einem Tag mehr als 5% des Gesamtwasservolumens beträgt, das sich im Becken mit den Wasserorganismen und dem Nitrifikationsbiofilter befindet.

## Beschreibung

Die Erfindung gehört zum Bereich der Landeskultur und kann in Anlagen mit geschlossener Wasserversorgung verwendet werden, die für die Aufzucht von Wasserorganismen bestimmt sind.

Es ist eine Wasserreinigungsanlage auf der Basis von Biofiltern bekannt, die aus einem mechanischen Reinigungsblock besteht, der als Gitter auf einem Einlasssammler und Sandfang mit einer Rohrleitung für die Sandentfernung ausgebildet ist. Der Sandfangausgang ist dabei mit einem Vorklärbeckeneingang eines radialen Typs mit einem Ausgabesystem von Schlick verbunden. Dabei wird der Block einer biologischen Reinigung durch Biofilter unterworfen, die sowohl wechselweise als auch parallel im Fall von einem Abwasserstoß funktionieren. Der Eingang in das Biofiltersystem ist dabei der Abwasserausgang aus einem ersten Klärbecken, und der Ausgang aus diesem System ist einem Nachklärbecken zugewandt. An diese Kette ist auch eine Chlorierungstelle angeschlossen, und das Nachklärbecken weist ein Schlickausgabesystem auf. Nach dem Nachklärbecken kommt das Reinwasser in den Ausstoß und dann in eine Quelle. Dabei ist das Biofiltersystem mit der Aufladung aus Polyethylenwellblechen in einer Größe von 500 x 500 mm gefertigt. Jedes Biofilter hat in seinem unteren Teil ein Rinnsal mit einer entsprechenden Querschnittsfläche von 200 x 200 mm sowie ein System eines unteren Lufteinlasses, ein System einer oberen Abwasserförderung und eine Aufladung, die in Form von Schichten aus Polyethylenwellblechen gefertigt ist. Dabei ist die Ausführung von Biofiltern mit einer harten Aufladung in Form von Ringen, Rohrabschnitten und anderen Elementen möglich. Alternativ kann eine Aufladung aus keramischen, kunststofflichen und metallischen Einfüllelementen bestehen. Je nach dem Stoff der Aufladung beträgt ihre Dichtheit 100 - 600 kg/m³, ihre Porosität 70 - 90% und die Höhe der Aufladungsschicht 1 - 6 m (s. Erfindungsanmeldung RU 2010129578/13 vom 19. Juli 2010, veröffentlicht am 27. Januar 2012, Protokoll Nr. 3, "Wasserreinigungsanlage auf der Basis von Biofiltern"). Ein Mangel der bekannten Anlage ist eine niedrige Effektivität im Teil von Nitrifikationsprozessen, was ihre Verwendung in der Anlage mit einem geschlossenen Zyklus der Wasserversorgung erschwert.

Aus dem Stand der Technik ist auch ein Tropfenfilter bekannt (Patent RU 2 513 401, Internationale Patentklassifikation C02F,3/00, B05B, 1/14, veröffentlicht am 20. April 2014, Protokoll Nr. 11). Der Tropfenfilter enthält einen Körper, ein Wasserleitungssystem, eine Sprüheinrichtung und eine Aufladung sowie einen Dosierbehälter für zu reinigendes Wasser. Seine Arbeit wird auf folgende Weise durchgeführt. Das zu reinigende Wasser kommt durch einen Einströmstutzen des Wasserleitungssystems. Dabei soll die Geschwindigkeit der Zuleitung von dem zu reinigenden Wasser mindestens 0,6 m/s betragen. Das Wasserleitungssystem enthält ein Verästelungsnetz von Rohrleitungen, auf denen Sprüheinrichtungen montiert sind, die sich gleichmäßig über den Aufladeöffnungen des Biofilters befinden. Diese technische Lösung wird als Prototyp angesehen. Ein Mangel des Prototyps ist eine niedrige organische Belastung im Betrieb, die bei der Verwendung in einer Anlage mit einem geschlossenen Zyklus der Wasserversorgung eine wesentliche Zunahme von Wasserorganismen nicht ermöglicht.

Die Aufgabe der vorliegenden Erfindung besteht in der Volumenvergrößerung von Wasserorganismen bei ihrer Aufzucht in einer Anlage mit einem geschlossenen Zyklus der Wasserversorgung.

Das zu erwartende technische Ergebnis bei der Verwendung in der Anlage mit einem geschlossenen Zyklus der Wasserversorgung besteht in einem Verfahren zur Wuchsvergrößerung der Biomasse von gezüchteten Wasserorganismen.

Diese Aufgabe wird dadurch gelöst, dass es im Betriebsverfahren von Nitrifikationsbiofiltern bei der Aufzucht von Wasserorganismen in Anlagen mit einem geschlossenen Zyklus der Wasserversorgung die Zuleitung in den Nitrifikationsbiofilter aus dem Becken mit den Wasserorganismen nach der mechanischen Filterung des zu reinigenden Wassers mit der Geschwindigkeit von 3 bis 28m³/h durch 1m³ des Biofilteransatzes verwirklicht wird, beim Ablauf vom Eingang oder Ausgang des Nitrifikationsbiofilters eines Volumenanteils von biologisch zu reinigendem Wasser und der Hinzufügung ins Becken mit Wasserorganismen frischen Wassers, das volumenmäßig gleich dem abgeleiteten Wasser ist. Es ist wünschenswert, dass der Ablauf vom Eingang oder Ausgang des Nitrifikationsbiofilters eines Volumenanteils von biologisch zu reinigendem Wasser innerhalb von 24 Stunden mehr als 5% vom Wassergesamtvolumen beträgt, das sich im Becken mit Wasserorganismen und im Nitrifikationsbiofilter befindet.

Das vorliegende Verfahren wird anhand der Figur näher erläutert.

Die Figur zeigt eine Bildstruktur der bekannten Anlage mit einem geschlossenen Zyklus der Wasserversorgung, die als Basisanlage für die Realisierung des vorliegenden Verfahrens verwendet wird.

### Beispiel 1

Das vorliegende Betriebsverfahren des Nitrifikationsbiofilters bei der Aufzucht von Wasserorganismen in Anlagen mit einem geschlossenen Zyklus der Wasserversorgung wurde im Beispiel 1 auf der Anlage (Figur) durchgeführt, die im Gebrauchsmusterpatent RU Nr. 153081 (veröffentlicht am 17. Juli 2015, Protokoll Nr. 19) offenbart ist. Sie besteht aus einem Stabilisationswasserkasten 1, einer zweiten Einheit 2 der mechanischen Filterung, einer dritten Einheit 3 der biologischen Wasseranreicherung, einem Denitrifikationsbiofilter 4, einem Denitrifikationsbiofilter 5, einem Belüftungskanal 6, einer UV-Bestrahlungseinheit 7, einem Heißwasserbereiter 8, einer neunten Stabilisierungseinheit 9 des Wasser-pH-Werts, einer Hauptpumpe 10, einem ersten Druckluftkompressor 11, einem Fischkasten 12, einem Reservewasserkasten 27, einem zweitem Druckluftkompressor 28, einer Zulaufeinheit 29 von Frischwasser, einer Ablaufeinheit für Abwasser und Sedimentfraktionen aus der Einheit der biologischen Wasseranreicherung, einem Denitrifikationsbiofilter der biologischen Wasseranreicherung, einem Denitrifikationsbiofilter und einem Nitrifikationsbiofilter 30, einem ersten Schütz 31, einem zweiten Schütz 32, einem dritten Schütz 33, einer Schichtenautomatikeinheit, einer Nachlauf- und Steuereinheit 35 von Wasserwerten und einer Entleerungspumpe 36 für Sedimentfraktionen aus der Einheit der biologischen Wasseranreicherung, Denitrifikationsbiofilter und Nitrifikationsbiofilter.

In die oben erwähnte Anlage der Figur waren folgende Ergänzungen eingebracht. Auf dem Eingang des Nitrifikationsbiofilters 5 war ein Wasserablauf montiert, der mit folgegemäß untereinander verbundenem Wasserregelventil und Wasserdurchflussmesser .2 versorgt ist und durch eine Rohrleitung mit einer Ablaufeinheit für Abwasser und Sedimentfraktionen aus der Einheit 30 für die biologische Wasseranreicherung, dem Denitrifikationsbiofilter und dem Nitrifikationsbiofilter verbunden ist. Dem Fischkasten 12 (das heißt dem Becken mit den Wasserorganismen) ist eine Rohrleitung 12.1. zugeführt, die mit einem Wasserregelventil 12.1.1 und einem Wasserdurchflussmesser 12.1.2 folgegemäß untereinander verbundenen ist und die mit einer Zulaufeinheit 29 von Frischwasser verbunden ist. Das Wasservolumen im Becken 12 mit den Wasserorganismen (Fischkasten) betrug 60 m³. Der Nitrifikationsbiofilter 5 hatte ein Volumen von 12 m³ mit einem Kunststoffansatz. Das Gesamtwasservolumen im Becken 12 mit den Wasserorganismen (Fischkasten) und dem Nitrifikationsbiofilter 5 betrug 90 m³. Die Anlage mit einem geschlossenen Zyklus der Wasserversorgung war 18 Monate in Betrieb, und ihr Nitrifikationsbiofilter 5 wurde periodisch gereinigt. Vor der neuen Bespannung war sie ebenfalls einer Reinigung unterworfen. Die Reinigungsprozedur sieht auch die Schließung des dritten Schützes 33 und die Öffnung des zweiten Schützes 32 vor mit einer nachfolgenden Wasserentnahme vom Nitrifikationsbiofilter 5 mit Hilfe einer Entleerungspumpe für Sedimentfraktionen aus einer Einheit 36 zur biologischen Wasseranreicherung mit dem Denitrifikationsbiofilter und Nitrifikationsbiofilter. Dabei wurde die Luft aus dem ersten Druckluftkompressor 11 ständig dem Nitrifikationsbiofilter 5 zugeführt. Im Laufe der Wasserentnahme aus dem Nitrifikationsbiofilter 5 durch die Entleerungspumpe der Sedimentfraktionen aus der Einheit 36 der biologischen Wasseranreicherung, Denitrifikationsbiofilter und Nitrifikationsbiofilter entsteht mit der ständig zugeführten Luft aus dem elften Druckluftkompressor 11 eine intensive Barbotage des Ansatzes vom Nitrifikationsbiofilter 36, die den Ansatz vom abgestorbenen Biofilm und den Ergebnissen der Lebenstätigkeit von Bakterien befreit, die zusammen mit dem Wasser durch die Entleerungspumpe der Sedimentfraktionen aus der Einheit 36 der biologischen Wasseranreicherung, Denitrifikationsbiofilter und Nitrifikationsbiofilter durch ihre Verschiebung in die Ablaufeinheit für Abwasser und Sedimentfraktionen aus der Einheit 30 der biologischen Wasseranreicherung, Denitrifikationsbiofilter und Nitrifikationsbiofilter entfernt werden. Dieser Vorgang dauert bis zur vollständigen Wasserentfernung aus dem Nitrifikationsbiofilter 5, nachdem der dritte Schütz 33 geöffnet und der zweite Schütz 32 geschlossen wird. Aus dem Reservewasserkasten 27 wird Wasser zugeführt, das den Wasser-Volumenverlust bei der Reinigung des Nitrifikationsbiofilters 5 kompensiert. Danach gilt der Reinigungsvorgang als abgeschlossen.

Im oben erwähnten Belüftungskanal 6 wurde der pH-Wert des Wassers durch die Stabilisierungseinheit 9 des Wasser-pH-Werts bei einem Wert von 7,0 gehalten (mittels einer dosierten Hinzufügung einer entsprechenden Menge von Alkali in das Wasser durch die Verwendung der Stabilisierungseinheit 9 des Wasser-pH-Werts. Danach wurde aufgrund von Sensorwerten der Wasserklarheit durch die UV-Bestrahlungseinheit 7 die Oberfläche des durchfließenden Wassers mit Ultraviolettlicht mit einer Wellenlänge von 266 nm und einer Intensität von circa 50 mJ/cm² bestrahlt.

Das den Heißwasserbereiter 8 auffüllende Frischwasser wurde bis zu einer Temperatur erwärmt, die die Temperatur im Becken mit den Wasserorganismen (Fischkasten 12) etwa auf 17°C aufrechterhalten ließ. Danach wurde es dem Belüftungskanal 6 zugeführt. Aus dem Belüftungskanal wurde das Wasser in die Hauptpumpe 10 geführt. Daraus wurde dank der Arbeit der oben erwähnten Hauptpumpe 10 gereinigtes Wasser zum Eingang des Beckens mit den Wasserorganismen (Fischkasten 12) verschoben. Die Förderleistung der Hauptpumpe 10 bei der Wasserzufuhr in das Becken mit den Wasserorganismen (Fischkasten 12) wurde so eingestellt, dass das biologisch zu reinigende Wasser nach der mechanischen Filterung mit einer Geschwindigkeit von 3 m³/h durch 1 m³ vom Ansatz des Nitrifikationsbiofilters 5 der Anlage mit einem geschlossenen Zyklus der Wasserversorgung zugeführt wird, die für die Ausführung des vorliegenden Verfahrens verwendet wird.

Vom Eingang des Nitrifikationsbiofilters 5 wurde durch das Wasserregelventil vom Wasserablauf ein Teil des Wassers (in einer Menge von 5,4 m³/Tag = 6% vom biologisch zu reinigenden Wasservolumen) durch die Rohrleitung in die Ablaufeinheit für Abwasser und Sedimentfraktionen aus der Einheit 30 der biologischen Wasseranreicherung, Denitrifikationsbiofilter und Nitrifikationsbiofilter abgeleitet. Dabei wurde das biologisch zu reinigende Wasservolumen durch den Wasserdurchflussmesser kontrolliert. Gleichzeitig mit dem biologisch zu reinigenden Wasserablauf wurde Frischwasser in das Becken mit den Wasserorganismen (Fischkasten 12) mit einem Volumen eingegeben, das dem abgeleiteten gleich war (das heißt 5,4 m³/Tag).

Die notwendige Sauerstoffkonzentration im wässrigen Medium, die für die Verwirklichung des vorliegenden Verfahrens der Anlage verwendet wird, wurde durch entsprechende Druckluftkompressoren 11 und 28 aufrechterhalten, und die Sauerstoffkonzentration im Eingang des Nitrifikationsbiofilters 5 wurde auf dem Niveau von nicht weniger als 5,5 mg/l gehalten. Aufgrund der von Sauerstoffsensoren eingehenden Information wurde dank dem Funktionieren der Einheit 3 der biologischen Wasseranreicherung die Sauerstoffkonzentration im Eingang des Nitrifikationsbiofilters 5 auf 0,9 mg/l gehalten.

Die notwendige Kohlendioxydkonzentration im wässrigen Medium, die für die Verwirklichung des vorliegenden Verfahrens der Anlage verwendet wird, wurde aufgrund der Information vom Kohlendioxydsensor und des ständigen Funktionierens der Nachlauf- und Steuereinheit von Wasserwerten aufrechterhalten, die die Leistung von dem ersten 11 und dem zweiten Druckluftkompressor 28 einstellt. Durch die erwähnten Druckluftkompressoren wurde die Kohlendioxydkonzentration im Eingang für die Wasserverschiebung im Mittel bei circa 15 mg/l eingestellt. Nach der Reinigung des Nitrifikationsbiofilters, die bei der Anlage mit einem geschlossenen Zyklus der Wasserversorgung mit den angegebenen Werten verwendet wird, wurde das Becken mit den Wasserorganismen (Fischkasten 12) mit Regenbogenforelle (Durchschnittsgewicht von 1,35 kg und Dichtheit bis 71,7 kg/m³) in der Gesamtbiomasse von 4300 kg besetzt.

Nach der Bespannung des Beckens der Anlage mit einem geschlossenen Zyklus der Wasserversorgung mit den Wasserorganismen (Fischkasten 12) mit der Regenbogenforelle mit einem Durchschnittsgewicht von 1,35 kg in einer Menge von 3185 Stück wurde die Fütterung dieser Wasserorganismen täglich durchgeführt. Die Fütterungsnormen wurden von potentiellen Möglichkeiten der Erneuerung des Nitrifikationsbiofilters bestimmt, nach der Reinigung am ersten Tag der Fütterung 30% der Tagesnorm der Fütterungsmenge, die 1,5% vom Gewicht der Wasserorganismen im Becken (Fischkasten 12) beträgt. Am zweiten Tag und an den folgenden Tagen wurde diese Norm um 10% bis zur erneuten vollständigen Fütterung von 100% (bis 1,5% vom Gewicht der Wasserorganismen im Becken (Fischkasten 12) pro Tag) erhöht.

Die Korrektur der Fütterungsmenge, die für Wasserorganismen (in diesem Fall für die Regenbogenforelle) gegeben war, wurde nach 15 Tagen durchgeführt. Die Volumenveränderung der Fischfütterung auf die Korrekturgröße wurde in gleichen Teilen im Laufe von 3 Tagen durchgeführt. Als Fütterung wurde zu 45% extrudiertes Futter mit frischem Protein und zu 15% Fett verwendet. Für die Effektivitätsbeurteilung des Nitrifikationsbiofilters bei den ausgewählten Betriebsarten des zu reinigenden Wasserdurchlasses durch 1 m³ vom Ansatz und vom Volumen des in das Becken mit den Wasserorganismen (Fischkasten 12) zugeführten Frischwassers wurde die Menge von 50 Stück Regenbogenforelle zur Bestimmung der Biomasse der Regenbogenforelle in diesem Becken mit den Wasserorganismen täglich durchgeführt.

Die untere Grenze des Rechenwerts der zu erwartenden Biomasse der Regenbogenforelle im Becken mit den Wasserorganismen nach 30 Tagen der Aufzucht in der Anlage mit einem geschlossenen Zyklus der Wasserversorgung mit dem vorliegenden Betriebsverfahren des Nitrifikationsbiofilters sollte einen Wert von 5096 kg haben.

Das erreichte Ergebnis des vorliegenden Verfahrens im Laufe von 30 Tagen der Aufzucht der Regenbogenforelle ist in der Tabelle 1 dargestellt. Das Ergebnis bei der Aufzucht der Wasserorganismen in der Anlage mit einem geschlossenen Zyklus der Wasserversorgung unter Verwendung des Prototyp-Verfahrens für einen analogen Zeitabschnitt betrug 5120 kg Biomasse.

**Tabelle 1**

| Bezeichnung des Verfahrens | Täglicher Zeitwert der Biomasse der Regenbogenforelle im Becken (Fischkasten), kg | | | | | | | | | | Biomasse von Wasserorganismen zum Ende des Zeitraums der Aufzucht, kg |
|---|---|---|---|---|---|---|---|---|---|---|---|
| | *1 Tag* | *2 Tag* | *3 Tag* | *4 Tag* | *5 Tag* | *6 Tag* | *7 Tag* | *8 Tag* | *9 Tag* | *10 Tag* | |
| Vorliegendes Verfahren | 4273 | 4281 | 4292 | 4305 | 4321 | 4340 | 4361 | 4385 | 4416 | 4448 | 5250 |
| | *11 Tag* | *12 Tag* | *13 Tag* | *14 Tag* | *15 Tag* | *16 Tag* | *17 Tag* | *18 Tag* | *19 Tag* | *20 Tag* | |
| | 4494 | 4539 | 4585 | 4630 | 4641 | 4657 | 4678 | 4724 | 4769 | 4815 | |
| | *21 Tag* | *22 Tag* | *23 Tag* | *24 Tag* | *25 Tag* | *26 Tag* | *27 Tag* | *28 Tag* | *29 Tag* | *30 Tag* | |
| | 4858 | 4902 | 4945 | 4989 | 5032 | 5076 | 5119 | 5163 | 5206 | 5250 | |
| | *1 Tag* | *2 Tag* | *3 Tag* | *4 Tag* | *5 Tag* | *6 Tag* | *7 Tag* | *8 Tag* | *9 Tag* | *10 Tag* | |
| Prototyp-Verfahren | 4278 | 4285 | 4294 | 4304 | 4317 | 4332 | 4350 | 4369 | 4400 | 4432 | 5120 |
| | *11 Tag* | *12 Tag* | *13 Tag* | *14 Tag* | *15 Tag* | *16 Tag* | *17 Tag* | *18 Tag* | *19 Tag* | *20 Tag* | |
| | 4479 | 4501 | 4524 | 4546 | 4555 | 4569 | 4587 | 4610 | 4632 | 4655 | |
| | *21 Tag* | *22 Tag* | *23 Tag* | *24 Tag* | *25 Tag* | *26 Tag* | *27 Tag* | *28 Tag* | *29 Tag* | *30 Tag* | |
| | 4701 | 4748 | 4795 | 4841 | 4888 | 4934 | 4981 | 5027 | 5074 | 5120 | |

Ausgehend vom Datenvergleich aus der Tabelle 1 für das vorliegende Verfahren mit dem Ergebnis für das Prototyp-Verfahren, gewährleistet das vorliegende Betriebsverfahren des Nitrifikationsbiofilters bei der Aufzucht der Wasserorganismen in der Anlage mit einem geschlossenen Zyklus der Wasserversorgung bei der Filterung von biologisch zu reinigendem Wasser, das mit einer Geschwindigkeit von 3 m³/h durch 1 m³ des Ansatzes des Nitrifikationsbiofilters und mit dem Ablauf vom Eingang des Nitrifikationsbiofilters von 5,4 m³/Tag des biologisch zu reinigenden Wasservolumens und mit der Hinzufügung in das Becken mit den Wasserorganismen von Frischwasser im Umfang von 5,4 m³/Tag ein sicheres Erreichen des vorliegenden technischen Ergebnisses. Für die Realisierung des vorliegenden Betriebsverfahrens des Nitrifikationsbiofilters bei der Aufzucht der Wasserorganismen in der Anlage mit einem geschlossenen Zyklus der Wasserversorgung können aufgrund des Stands der Technik bekannte Anlagen, Stoffe und Konstruktionen verwendet werden.

### Beispiel 2

Das vorliegende Betriebsverfahren des Nitrifikationsbiofilters bei der Aufzucht von Wasserorganismen in einer Anlage mit einem geschlossenen Zyklus der Wasserversorgung wurde im vorliegenden Beispiel auf der Anlage in Figur durchgeführt, die im Beispiel 1 beschrieben ist. In die bekannte Anlage (Figur) waren Ergänzungen eingebracht, die auch im Beispiel 1 beschrieben sind.

Das Wasservolumen im Becken mit den Wasserorganismen (Fischkasten 12) betrug 200 m³. Das Volumen des Kunststoffansatzes des Nitrifikationsbiofilters 5 betrug 25 m³. Das Gesamtwasservolumen in dem Becken mit den Wasserorganismen und dem Nitrifikationsbiofilter 5 betrug 292 m³.

Die Anlage mit einem geschlossenen Zyklus der Wasserversorgung war 12 Monate in Betrieb, und ihr Nitrifikationsbiofilter 5 wurde periodisch gereinigt. Vor der neuen Bespannung war sie auch der Reinigung unterworfen. Die Reinigungsprozedur war der im Beispiel 1 beschriebenen Reinigungsprozedur analog.

Im Belüftungskanal 6 wurde der pH-Wert des Wassers durch die Stabilisierungseinheit 9 auf einen Wasser-pH-Wert von 7,0 eingestellt (mittels einer dosierten Hinzufügung einer entsprechenden Menge von Alkali in das Wasser unter Verwendung der Stabilisierungseinheit 9 für den Wasser-pH-Wert). Danach wurde die Oberfläche des durchfließenden Wassers aufgrund von Sensorwerten der Wasserklarheit durch eine UV-Bestrahlungseinheit 7 mit Ultraviolettlicht mit einer Wellenlänge von 266 nm und einer Intensität von circa 50 mJ/cm² bestrahlt.

Das den Heißwasserbereiter 8 auffüllende Frischwasser wurde bis zu einer Temperatur erwärmt, die die Temperatur im Becken mit den Wasserorganismen (Fischkasten 12) von circa 23°C aufrechterhalten ließ. Danach wurde es dem Belüftungskanal 6 zugeführt. Aus dem Belüftungskanal 10 wurde das Wasser in die Hauptpumpe 10 gebracht. Daraus wurde dank der Arbeit der erwähnten Hauptpumpe 10 gereinigtes Wasser zum Eingang des Beckens mit den Wasserorganismen (Fischkasten 12) verschoben. Die Förderleistung der Hauptpumpe 10 bei der Wasserzufuhr in das Becken mit den Wasserorganismen wurde so gesteuert, dass das biologisch zu reinigende Wasser nach der mechanischen Filterung mit einer Geschwindigkeit von 2,95 m³/h durch 1 m³ des Ansatzes des Nitrifikationsbiofilters 5 der Anlage mit einem geschlossenen Zyklus der Wasserversorgung zugeführt wird, die für die Ausführung des vorliegenden Verfahrens verwendet wird.

Vom Eingang des Nitrifikationsbiofilters 5 wurde durch das Wasserregelventil .1 vom Wasserablauf ein Teil des Wassers (in der Menge von 23,4 m³/Tag = 8% des biologisch zu reinigenden Wasservolumens) durch die Rohrleitung in die Ablaufeinheit für Abwasser und Sedimentfraktionen aus der Einheit 30 der biologischen Wasseranreicherung, Denitrifikationsbiofilter und Nitrifikationsbiofilter abgeleitet. Dabei wurde das biologisch zu reinigende Wasservolumen durch den Wasserdurchflussmesser kontrolliert.

Gleichzeitig mit dem Ablauf des biologisch zu reinigenden Wassers wurde Frischwasser in das Becken mit den Wasserorganismen (Fischkasten 12) in einem Volumen hinzugegeben, das dem abgeleiteten gleich ist (das heißt 23,4 m³/Tag).

Die Aufrechterhaltung der notwendigen Sauerstoffkonzentration im wässrigen Medium, die für die Verwirklichung des vorliegenden Verfahrens der Anlage verwendet wird, wurde durch entsprechende Druckluftkompressoren 11 und 28 durchgeführt. Die Sauerstoffkonzentration im Wasser im Eingang des Nitrifikationsbiofilters 5 wurde auf ein Niveau von nicht weniger als 5,5 mg/l eingestellt. Aufgrund der von Sauerstoffsensoren eingehenden Information (dank dem Funktionieren der Einheit 3 der biologischen Wasseranreicherung) wurde die Sauerstoffkonzentration im Eingang des Nitrifikationsbiofilters 5 von 0,9 mg/l aufrechterhalten.

Die notwendige Kohlendioxydkonzentration im wässrigen Medium, die für die Verwirklichung des vorliegenden Verfahrens der Anlage verwendet wird, wurde aufgrund der Information des Kohlendioxydsensors und des ständigen Funktionierens der Nachlauf- und Steuereinheit von Wasserwerten aufrechterhalten, die die Leistung des ersten 11 und des zweiten Druckluftkompressors 28 einstellt. Durch die erwähnten Druckluftkompressoren wurde die Kohlendioxydkonzentration im Wasser im Eingang für die Wasserverschiebung im Mittel auf einen Wert von 18 mg/l eingestellt.

Nach der Reinigung des Nitrifikationsbiofilters, die bei der Anlage mit einem geschlossenen Zyklus der Wasserversorgung mit den angegebenen Werten verwendet wird, wurde das Becken (Fischkasten 12) mit sibirischem Stör (mit einem Durchschnittsgewicht von 1,80 kg und einer Dichtheit bis 40,1 kg/m³) in der Gesamtbiomasse von 8000 kg besetzt.

Nach der Bespannung des Beckens der Anlage mit einem geschlossenen Zyklus der Wasserversorgung mit sibirischem Stör mit einem Durchschnittsgewicht von 1,80 kg in einer Menge von 4444 Stück wurde die Fütterung dieser Wasserorganismen täglich durchgeführt. Die Fütterungsordnung der Wasserorganismen hat der im Beispiel 1 offenbarten Fütterungsordnung entsprochen. Für die Effektivitätsbeurteilung des Nitrifikationsbiofilters bei den ausgewählten Durchlassbetrieben von zu reinigendem Wasser durch 1 m³ des Ansatzes und eines Volumens des in das Becken mit den Wasserorganismen (Fischkasten 12) zugeführten Frischwassers wurde die Auswaage von 50 Stück sibirischen Störs zur Bestimmung der Biomasse sibirischen Störs in diesem Becken mit den Wasserorganismen täglich durchgeführt.

Die untere Grenze des Rechenwerts der zu erwartenden Biomasse von sibirischem Stör im Becken mit den Wasserorganismen (nach 30 Tagen der Aufzucht in der Anlage mit einem geschlossenen Zyklus der Wasserversorgung mit dem vorliegenden Betriebsverfahren des Nitrifikationsbiofilters) sollte einen Wert von 9333 kg haben.

Das gefundene Ergebnis für das vorliegende Verfahren im Zeitraum der Aufzucht von sibirischem Stör im Laufe von 30 Tagen ist in der Tabelle 2 dargestellt. Das Ergebnis bei der Aufzucht der Wasserorganismen in der Anlage mit einem geschlossenen Zyklus der Wasserversorgung unter Verwendung des Prototyp-Verfahrens für einen analogen Zeitraum hat einen Wert von 9456 kg Biomasse betragen.

**Tabelle 2**

| Bezeichnung des Verfahrens | Täglicher Zeitwert der Biomasse von sibirischem Stör im Becken (Fischkasten), kg | | | | | | | | | | Biomasse von Wasserorganismen zum Ende des Zeitraums der Aufzucht, kg |
|---|---|---|---|---|---|---|---|---|---|---|---|
| | *1 Tag* | *2 Tag* | *3 Tag* | *4 Tag* | *5 Tag* | *6 Tag* | *7 Tag* | *8 Tag* | *9 Tag* | *10 Tag* | |
| Vorliegendes Verfahren | 7956 | 7969 | 7987 | 8009 | 8036 | 8067 | 8102 | 8142 | 8193 | 8243 | 9199 |
| | *11 Tag* | *12 Tag* | *13 Tag* | *14 Tag* | *15 Tag* | *16 Tag* | *17 Tag* | *18 Tag* | *19 Tag* | *20 Tag* | |
| | 8306 | 8368 | 8430 | 8493 | 8511 | 8537 | 8573 | 8635 | 8698 | 8760 | |
| | *21 Tag* | *22 Tag* | *23 Tag* | *24 Tag* | *25 Tag* | *26 Tag* | *27 Tag* | *28 Tag* | *29 Tag* | *30 Tag* | |
| | 8819 | 8877 | 8936 | 8994 | 9052 | 9070 | 9093 | 9123 | 9158 | 9199 | |
| | *1 Tag* | *2 Tag* | *3 Tag* | *4 Tag* | *5 Tag* | *6 Tag* | *7 Tag* | *8 Tag* | *9 Tag* | *10 Tag* | |
| Prototyp-Verfahren | 7961 | 7972 | 7988 | 8008 | 8032 | 8059 | 8091 | 8126 | 8181 | 8235 | 9456 |
| | 11 *Tag* | *12 Tag* | *13 Tag* | *14 Tag* | *15 Tag* | *16 Tag* | 17 *Tag* | *18 Tag* | *19 Tag* | *20 Tag* | |
| | 8300 | 8358 | 8422 | 8486 | 8512 | 8551 | 8602 | 8667 | 8725 | 8789 | |
| | *21 Tag* | *22 Tag* | *23 Tag* | *24 Tag* | *25 Tag* | *26 Tag* | *27 Tag* | *28 Tag* | *29 Tag* | *30 Tag* | |
| | 8859 | 8921 | 8991 | 9067 | 9137 | 9192 | 9255 | 9324 | 9387 | 9456 | |

Ausgehend vom Datenvergleich aus der Tabelle 2 für das vorliegende Verfahren mit dem Ergebnis, das für das Prototyp-Verfahren gilt, gewährleistet das vorliegende Betriebsverfahren des Nitrifikationsbiofilters bei der Aufzucht von Wasserorganismen in der Anlage mit einem geschlossenen Zyklus der Wasserversorgung bei der Filterung von biologisch zu reinigendem Wasser, das mit einer Geschwindigkeit von 2,95 m³/h durch 1 m³ des Ansatzes des Nitrifikationsbiofilters und mit dem Ablauf vom Eingang des Nitrifikationsbiofilters von 23,4 m³/Tag des biologisch zu reinigenden Wasservolumens und mit der Hinzufügung in das Becken mit den Wasserorganismen (Fischkasten 12) von Frischwasser im Umfang von 23,4 m³/Tag, ein Erreichen des vorliegenden technischen Ergebnisses.

### Beispiel 3

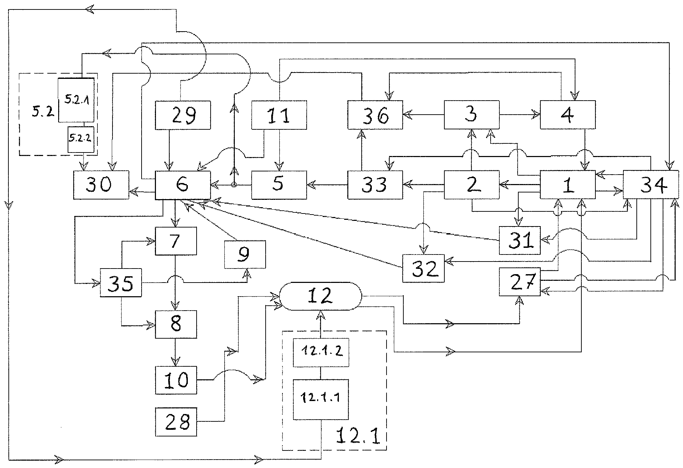

Das vorliegende Betriebsverfahrens des Nitrifikationsbiofilters bei der Aufzucht von Wasserorganismen in der Anlage mit einem geschlossenen Zyklus der Wasserversorgung wurde im vorliegenden Beispiel auf der Anlage in Fig. 1 durchgeführt, die im Beispiel 1 beschrieben ist. In die bekannte Anlage (Figur) waren Ergänzungen eingebracht, die auch im Beispiel 1 beschrieben sind.

Das Wasservolumen im Becken mit den Wasserorganismen (Fischkasten 12) betrug 217 m³. Das Volumen des Kunststoffansatzes des Nitrifikationsbiofilters 5 betrug 11 m³. Das Gesamtwasservolumen in dem Becken mit den Wasserorganismen und dem Nitrifikationsbiofilter 5 betrug 316 m³.

Die Anlage mit einem geschlossenen Zyklus der Wasserversorgung war 15 Monate in Betrieb, und ihr Nitrifikationsbiofilter 5 wurde periodisch gereinigt. Vor der neuen Bespannung war sie auch der Reinigung unterworfen. Die Reinigungsprozedur des Nitrifikationsbiofilters war der im Beispiel 1 beschriebenen Reinigungsprozedur analog.

Im oben erwähnten Belüftungskanal 6 wurde der pH-Wert des Wassers durch die Stabilisierungseinheit 9 des Wasser-pH-Werts auf den Wert 7,0 eingestellt (mittels einer dosierten Hinzufügung einer entsprechenden Menge von Alkali in das Wasser unter Verwendung der Stabilisierungseinheit 9 des Wasser-pH-Werts). Danach wurde die Oberfläche des durchfließenden Wassers aufgrund von Sensorwerten der Wasserklarheit durch eine UV-Bestrahlungseinheit 7 mit Ultraviolettlicht mit einer Wellenlänge von 266 nm und einer Intensität von circa 50 mJ/cm² bestrahlt. Das den Heißwasserbereiter 8 auffüllende Frischwasser wurde bis zu einer Temperatur erwärmt, die die Temperatur im Becken mit den Wasserorganismen (Fischkasten 12) bei einem Wert von circa 25°C aufrechterhalten ließ. Danach wurde es dem Belüftungskanal 6 zugeführt. Aus dem Belüftungskanal 10 wurde das Wasser in die Hauptpumpe 10 gebracht. Daraus wurde dank der Arbeit der erwähnten Hauptpumpe 10 gereinigtes Wasser zum Eingang des Beckens mit den Wasserorganismen verschoben.

Die Förderleistung der Hauptpumpe 10 bei der Wasserzufuhr in das Becken mit den Wasserorganismen wurde so eingestellt, dass das biologisch zu reinigende Wasser nach der mechanischen Filterung mit einer Geschwindigkeit von 12 m³/h durch 1 m³ des Ansatzes des Nitrifikationsbiofilters 5 der Anlage mit einem geschlossenen Zyklus der Wasserversorgung zugeführt wird, die für die Ausführung des vorliegenden Verfahrens verwendet wird.

Vom Eingang des Nitrifikationsbiofilters 5 wurde durch das Wasserregelventil vom Wasserablauf ein Teil des Wassers (in der Menge von 22,1 m³/Tag = 7% des biologisch zu reinigenden Wasservolumens) durch die Rohrleitung in die Ablaufeinrichtung für Abwasser und Sedimentfraktionen aus der Einheit 30 der biologischen Wasseranreicherung, Denitrifikationsbiofilter und Nitrifikationsbiofilter abgeleitet. Dabei wurde das biologisch zu reinigende Wasservolumen durch den Wasserdurchflussmesser kontrolliert.

Gleichzeitig mit dem Ablauf des biologisch zu reinigenden Wassers wurde Frischwasser in das Becken mit den Wasserorganismen (Fischkasten 12) in einem Volumen hinzugegeben, das dem abgeleiteten gleich ist (das heißt 22,1 m³/Tag).

Die notwendige Sauerstoffkonzentration im wässrigen Medium, die für die Verwirklichung des vorliegenden Verfahrens der Anlage aufrechterhalten wird, wurde durch entsprechende Druckluftkompressoren 11 und 28 durchgeführt. Die Sauerstoffkonzentration des Wassers im Eingang des Nitrifikationsbiofilters 5 wurde auf ein Niveau von nicht weniger als 5,5 mg/l eingestellt. Aufgrund der von Sauerstoffsensoren eingehenden Information (dank dem Funktionieren der Einheit 3 der biologischen Wasseranreicherung) wurde die Sauerstoffkonzentration im Eingang des Nitrifikationsbiofilters 5 auf einem Wert von 0,9 mg/l aufrechterhalten.

Die notwendige Kohlendioxydkonzentration im wässrigen Medium, die für die Verwirklichung des vorliegenden Verfahren der Anlage verwendet wird, wurde aufgrund der Information des Kohlendioxydsensors und des ständigen Funktionierens der Nachlauf- und Steuereinheit von Wasserwerten aufrechterhalten, die die Leistung des ersten 11 und des zweiten Druckluftkompressors 28 einstellt. Durch die erwähnten Druckluftkompressoren wurde die Kohlendioxydkonzentration im Wasser im Eingang für die Wasserverschiebung im Mittel auf einen Wert von 14 mg/l eingestellt.

Nach der Reinigung des Nitrifikationsbiofilters, die bei der Anlage mit einem geschlossenen Zyklus der Wasserversorgung mit den angegebenen Werten angewendet wird, wurde das Becken (Fischkasten 12) mit russischem Stör (Durchschnittsgewicht von 6,0 kg und einer Dichtheit bis 30 kg/m³) in einer Gesamtbiomasse von 6500 kg besetzt.

Nach der Bespannung des Beckens mit den Wasserorganismen (Fischkasten 12) der Anlage mit einem geschlossenen Zyklus der Wasserversorgung mit russischem Stör mit einem Durchschnittsgewicht von 6,0 kg in einer Menge von 1083 Stück wurde die Fütterung von diesen Wasserorganismen täglich durchgeführt.

Die Fütterungsordnung der Wasserorganismen hat der im Beispiel 1 offenbarten Fütterungsordnung entsprochen.

Für die Effektivitätsbeurteilung des Nitrifikationsbiofilters bei den ausgewählten Durchlassbetrieben von zu reinigendem Wasser durch 1 m³ des Ansatzes und des Volumens des in das Becken mit den Wasserorganismen zugeführten Frischwassers wurde die Auswaage von 30 Stück russischen Störs zur Bestimmung der Biomasse russischen Störs in diesem Becken mit den Wasserorganismen täglich durchgeführt.

Die untere Grenze des Rechenwerts der zu erwartenden Biomasse von russischem Stör im Becken mit den Wasserorganismen nach 30 Tagen der Aufzucht in der Anlage mit einem geschlossenen Zyklus der Wasserversorgung mit dem vorliegenden Betriebsverfahren des Nitrifikationsbiofilters sollte einen Wert von 6879 kg haben.

Das erreichte Ergebnis für das vorliegende Verfahren im Zeitraum der Aufzucht von russischem Stör im Laufe von 30 Tagen ist in der Tabelle 3 dargestellt.

Das Ergebnis bei der Aufzucht von Wasserorganismen in der Anlage mit einem geschlossenen Zyklus der Wasserversorgung unter Verwendung des Prototyp-Verfahrens für einen analogen Zeitraum betrug 5964 kg Biomasse.

**Tabelle 3**

| Bezeichnung des Verfahrens | Täglicher Zeitwert der Biomasse von russischem Stör im Becken (Fischkasten), kg | | | | | | | | | | Biomasse der Wasserorganismen zum Ende des Zeitraums der Aufzucht, kg |
|---|---|---|---|---|---|---|---|---|---|---|---|
| | *1 Tag* | *2 Tag* | *3 Tag* | *4 Tag* | *5 Tag* | *6 Tag* | *7 Tag* | *8 Tag* | *9 Tag* | *10 Tag* | |
| Vorliegendes Verfahren | 6487 | 6491 | 6496 | 6503 | 6510 | 6519 | 6529 | 6540 | 6560 | 6580 | 7190 |
| | *11 Tag* | *12 Tag* | *13 Tag* | *14 Tag* | *15 Tag* | *16 Tag* | *17 Tag* | *18 Tag* | *19 Tag* | *20 Tag* | |
| | 6611 | 6643 | 6675 | 6706 | 6711 | 6719 | 6729 | 6761 | 6792 | 6824 | |
| | *21 Tag* | *22 Tag* | *23 Tag* | *24 Tag* | *25 Tag* | *26 Tag* | *27 Tag* | *28 Tag* | *29 Tag* | *30 Tag* | |
| | 6861 | 6897 | 6934 | 6971 | 7007 | 7044 | 7080 | 7117 | 7154 | 7190 | |
| | *1 Tag* | *2 Tag* | *3 Tag* | *4 Tag* | *5 Tag* | *6 Tag* | *7 Tag* | *8 Tag* | *9 Tag* | *10 Tag* | |
| Prototyp-Verfahren | 6492 | 6490 | 6487 | 6482 | 6477 | 6471 | 6465 | 6457 | 6449 | 6441 | 5964 |
| | *11 Tag* | *12 Tag* | *13 Tag* | *14 Tag* | *15 Tag* | *16 Tag* | *17 Tag* | *18 Tag* | *19 Tag* | *20 Tag* | |
| | 6430 | 6421 | 6410 | 6400 | 6396 | 6390 | 6381 | 6371 | 6362 | 6351 | |
| | *21 Tag* | *22 Tag* | *23 Tag* | *24 Tag* | *25 Tag* | *26 Tag* | *27 Tag* | *28 Tag* | *29 Tag* | *30 Tag* | |
| | 6311 | 6275 | 6234 | 6190 | 6150 | 6117 | 6081 | 6041 | 6004 | 5964 | |

Ausgehend von einem Datenvergleich aus der Tabelle 3 für das vorliegende Verfahren und für das Prototyp-Verfahren gewährleistet das vorliegende Betriebsverfahren des Nitrifikationsbiofilters bei der Aufzucht von Wasserorganismen in der Anlage mit einem geschlossenen Zyklus der Wasserversorgung eine sichere Erreichung des genannten technischen Ergebnisses.

### Beispiel 4

Das vorliegende Betriebsverfahren des Nitrifikationsbiofilters bei der Aufzucht von Wasserorganismen in der Anlage mit einem geschlossenen Zyklus der Wasserversorgung wurde im Beispiel 4 auf der Anlage (Figur) durchgeführt, die im Beispiel 1 beschrieben ist. In die bekannte Anlage (Figur) waren Ergänzungen angebracht, die auch im Beispiel 1 beschrieben sind.

Das Wasservolumen im Becken mit Wasserorganismen betrug 1200 m³. Das Volumen des Kunststoffansatzes des Nitrifikationsbiofilters 5 betrug 105 m³. Das Gesamtwasservolumen im Becken mit den Wasserorganismen und dem Nitrifikationsbiofilter 5 betrug 1752 m³.

Die Anlage mit einem geschlossenen Zyklus der Wasserversorgung war 15 Monate in Betrieb, und ihr Nitrifikationsbiofilter 5 wurde periodisch gereinigt. Vor der neuen Bespannung war sie auch der Reinigung unterworfen. Die Reinigungsprozedur des Nitrifikationsbiofilters war der im Beispiel 1 beschriebenen Reinigungsprozedur analog.

Im Belüftungskanal 6 wurde der Wasser-pH-Wert durch die Stabilisierungseinheit 9 auf den Wert 7,0 eingestellt (mittels einer dosierten Hinzufügung einer entsprechenden Menge Alkali in das Wasser unter Verwendung der Stabilisierungseinheit 9). Danach wurde die Oberfläche des durchfließenden Wassers aufgrund von Sensorwerten der Wasserklarheit durch die UV-Bestrahlungseinheit 7 mit Ultraviolettlicht einer Wellenlänge von 266 nm und einer Intensität von circa 50 mJ/cm² bestrahlt.

Das den Heißwasserbereiter 8 auffüllende Frischwasser wurde auf eine Temperatur erwärmt, die die Temperatur im Becken mit den Wasserorganismen auf den Wert von circa 25°C aufrechterhalten ließ. Danach wurde es dem Belüftungskanal 6 zugeführt. Aus dem Belüftungskanal 10 wurde das Wasser in die Hauptpumpe 10 geleitet. Daraus wurde dank der Arbeit der erwähnten Hauptpumpe 10 gereinigtes Wasser in den Eingang des Beckens mit den Wasserorganismen verschoben. Die Förderleistung der Hauptpumpe 10 bei der Wasserzufuhr in das Becken mit den Wasserorganismen wurde so eingestellt, dass das biologisch zu reinigende Wasser nach der mechanischen Filterung mit einer Geschwindigkeit von 17 m³/h durch 1 m³ des Ansatzes des Nitrifikationsbiofilters 5 der Anlage mit einem geschlossenen Zyklus der Wasserversorgung zugeführt wird, die für die Ausführung des vorliegenden Verfahrens verwendet wird.

Vom Eingang des Nitrifikationsbiofilters 5 wurde durch das Wasserregelventil vom Wasserablauf ein Teil des Wassers (in einer Menge von 175,2 m³/Tag = 10% des biologisch zu reinigenden Wasservolumens) durch die Rohrleitung in die Ablaufeinheit für Abwasser und Sedimentfraktionen aus der Einheit 30 der biologischen Wasseranreicherung, Denitrifikationsbiofilter und Nitrifikationsbiofilter abgeleitet. Dabei wurde das biologisch zu reinigende Wasservolumen durch den Wasserdurchflussmesser kontrolliert. Gleichzeitig mit dem Ablauf des biologisch zu reinigenden Wassers wurde Frischwasser ins Becken mit den Wasserorganismen mit einem Volumen hinzugegeben, das dem abgeleiteten gleich ist (das heißt 175,2m³/Tag).

Die notwendige Sauerstoffkonzentration im wässrigen Medium, die für die Verwirklichung des vorliegenden Verfahrens der Anlage verwendet wird, wurde durch entsprechende Druckluftkompressoren 11 und 28 erreicht, und die Sauerstoffkonzentration im Wasser im Eingang des Nitrifikationsbiofilters 5 wurde auf das Niveau von nicht weniger als 5,5 mg/l eingestellt. Aufgrund der von Sauerstoffsensoren eingehenden Information (dank dem Funktionieren der Einheit 3 der biologischen Wasseranreicherung) wurde die Sauerstoffkonzentration im Eingang des Nitrifikationsbiofilters 5 auf einem Wert von 0,9 mg/l aufrechterhalten.

Die notwendige Kohlendioxydkonzentration im wässrigen Medium, die für die Verwirklichung des vorliegenden Verfahrens der Anlage verwendet wird, wurde aufgrund der Information des Kohlendioxydsensors und des ständigen Funktionierens der Nachlauf- und Steuereinheit von Wasserwerten aufrechterhalten, die die Leistung des ersten 11 und des zweiten Druckluftkompressors 28 einstellt. Durch die erwähnten Druckluftkompressoren wurde die Kohlendioxydkonzentration im Wasser im Eingang für die Wasserverschiebung im Mittel auf einen Wert von 16 mg/l eingestellt.

Nach der Reinigung des Nitrifikationsbiofilters, die bei der Anlage mit einem geschlossenen Zyklus der Wasserversorgung mit den angegebenen Werten verwendet wird, wurde das Becken mit den Wasserorganismen mit Hybriden des sibirischen und russischen Störs (Durchschnittsgewicht von 6,8 kg und Dichtheit bis 60 kg/m³) in der Gesamtbiomasse von 72000 kg besetzt.

Nach der Bespannung des Beckens mit den Wasserorganismen der Anlage mit einem geschlossenen Zyklus der Wasserversorgung mit Hybriden des sibirischen und russischen Störs mit einem Durchschnittsgewicht von 6,8 kg in der Menge von 10588 Stück wurde die Fütterung dieser Wasserorganismen täglich durchgeführt. Die Fütterungsordnung der Wasserorganismen hat der im Beispiel 1 offenbarten Fütterungsordnung entsprochen.

Für die Effektivitätsbeurteilung des Nitrifikationsbiofilters bei den ausgewählten Durchlassbetrieben des zu reinigendem Wassers durch 1 m³ des Ansatzes und des Volumens des in das Becken mit den Wasserorganismen zugeführten Frischwassers wurde die Auswaage von 30 Stück Hybriden des sibirischen und russischen Störs zur Bestimmung der Biomasse dieser Hybriden in diesem Becken mit den Wasserorganismen täglich durchgeführt.

Die untere Grenze des Rechenwerts der zu erwartenden Biomasse dieser Hybride im Becken mit den Wasserorganismen nach 30 Tagen der Aufzucht in der Anlage mit einem geschlossenen Zyklus der Wasserversorgung mit dem vorliegenden Betriebsverfahren des Nitrifikationsbiofilters sollte einen Wert von 77294 kg haben.

Das erreichte Ergebnis für das vorliegende Verfahren im Zeitraum der Aufzucht der Hybriden des sibirischen und russischen Störs im Laufe von 30 Tagen ist in der Tabelle 4 dargestellt. Das Ergebnis bei der Aufzucht der Wasserorganismen in der Anlage mit einem geschlossenen Zyklus der Wasserversorgung unter Verwendung des Prototyp-Verfahrens für einen analogen Zeitraum betrug 62697 kg Biomasse.

**Tabelle 4**

| Bezeichnung des Verfahrens | Täglicher Zeitwert der Biomasse von Hybriden des sibirischen und russischen Störs im Becken (Fischkasten 12), kg | | | | | | | | | | Biomasse von Wasserorganismen zum Ende des Zeitraumes von der Aufzucht, kg |
|---|---|---|---|---|---|---|---|---|---|---|---|
| | *1 Tag* | *2 Tag* | *3 Tag* | *4 Tag* | *5 Tag* | *6 Tag* | *7 Tag* | *8 Tag* | *9 Tag* | *10 Tag* | |
| Vorliegendes Verfahren | 71824 | 71876 | 71947 | 72035 | 72141 | 72265 | 72406 | 72565 | 72756 | 72948 | 79735 |
| | *11 Tag* | *12 Tag* | *13 Tag* | *14 Tag* | *15 Tag* | *16 Tag* | *17 Tag* | *18 Tag* | *19 Tag* | *20 Tag* | |
| | 73334 | 73721 | 74107 | 74494 | 74564 | 74670 | 74811 | 75198 | 75584 | 75971 | |
| | *21 Tag* | *22 Tag* | *23 Tag* | *24 Tag* | *25 Tag* | *26 Tag* | *27 Tag* | *28 Tag* | *29 Tag* | *30 Tag* | |
| | 76347 | 76724 | 77100 | 77476 | 77853 | 78229 | 78606 | 78982 | 79359 | 79735 | |
| | *1 Tag* | *2 Tag* | *3 Tag* | *4 Tag* | *5 Tag* | *6 Tag* | *7 Tag* | *8 Tag* | *9 Tag* | *10 Tag* | |
| Prototyp-Verfahren | 71829 | 71820 | 71809 | 71794 | 71777 | 71757 | 71734 | 71709 | 71680 | 71652 | 62697 |
| | *11 Tag* | *12 Tag* | *13 Tag* | *14 Tag* | *15 Tag* | *16 Tag* | *17 Tag* | *18 Tag* | *19 Tag* | *20 Tag* | |
| | 71178 | 70752 | 70278 | 69805 | 69615 | 69331 | 68953 | 68479 | 68053 | 67579 | |
| | *21 Tag* | *22 Tag* | *23 Tag* | *24 Tag* | *25 Tag* | *26 Tag* | *27 Tag* | *28 Tag* | *29 Tag* | *30 Tag* | |
| | 67071 | 66613 | 66105 | 65545 | 65037 | 64630 | 64172 | 63664 | 63206 | 62697 | |

Ausgehend vom Datenvergleich aus der Tabelle 4 für das vorliegende Verfahren und für das Prototyp-Verfahren gewährleistet das vorliegende Betriebsverfahren des Nitrifikationsbiofilters bei der Aufzucht von Wasserorganismen in der Anlage mit einem geschlossenen Zyklus der Wasserversorgung ein sicheres Erreichen des genannten technischen Ergebnisses.

### Beispiel 5

Das vorliegende Betriebsverfahren des Nitrifikationsbiofilters bei der Aufzucht von Wasserorganismen in der Anlage mit einem geschlossenen Zyklus der Wasserversorgung wurde im Beispiel 5 auf der Anlage durchgeführt, die im Beispiel 1 beschrieben ist. In die bekannte Anlage (Figur) waren Ergänzungen eingebracht, die auch im Beispiel 1 beschrieben sind.

Das Wasservolumen im Becken mit den Wasserorganismen betrug 500 m³. Das Volumen des Kunststoffansatzes des Nitrifikationsbiofilters 5 betrug 44 m³. Das Gesamtwasservolumen in dem Becken mit den Wasserorganismen und dem Nitrifikationsbiofilter 5 betrug 730 m³.

Die Anlage mit einem geschlossenen Zyklus der Wasserversorgung war 12 Monate in Betrieb, und ihr Nitrifikationsbiofilter 5 wurde periodisch gereinigt. Vor der neuen Bespannung war sie auch der Reinigung unterworfen. Die Reinigungsprozedur des Nitrifikationsbiofilters war der im Beispiel 1 beschriebenen Reinigungsprozedur analog.

Im oben erwähnten Belüftungskanal 6 wurde der Wasser-pH-Wert durch die Stabilisierungseinheit 9 auf einen Wert von 7,0 eingestellt (mittels einer dosierten Hinzufügung einer entsprechenden Menge an Alkali in das Wasser unter Verwendung der Stabilisierungseinheit 9). Danach wurde die Oberfläche des durchfließenden Wassers aufgrund von Sensorwerten der Wasserklarheit durch die UV-Bestrahlungseinheit 7 mit Ultraviolettlicht einer Wellenlänge von 266 nm und einer Intensität von circa 50 mJ/cm² bestrahlt.

Das den Heißwasserbereiter 8 auffüllende Frischwasser wurde bis zu einer Temperatur erwärmt, die die Temperatur im Becken mit den Wasserorganismen bei einem Wert von circa 24°C aufrechterhalten ließ. Danach wurde es dem Belüftungskanal 6 zugeführt. Aus dem Belüftungskanal wurde das Wasser in die Hauptpumpe 10 geleitet. Daraus wurde dank der Arbeit der erwähnten Hauptpumpe 10 gereinigtes Wasser zum Eingang des Beckens mit den Wasserorganismen verschoben. Die Förderleistung der Hauptpumpe 10 bei der Wasserzufuhr in das Becken mit den Wasserorganismen wurde so eingestellt, dass das biologisch zu reinigende Wasser nach der mechanischen Filterung mit einer Geschwindigkeit von 23 m³/h durch 1 m³ des Ansatzes des Nitrifikationsbiofilters 5 der Anlage mit einem geschlossenen Zyklus der Wasserversorgung zugeführt wird, die für die Ausführung des vorliegenden Verfahrens verwendet wird.

Vom Eingang des Nitrifikationsbiofilters 5 wurde durch das Wasserregelventil des Wasserablaufs ein Teil des Wassers (in einer Menge von 39,4 m³/Tag = 5,4% des biologisch zu reinigenden Wasservolumens) durch die Rohrleitung in die Ablaufeinheit für Abwasser und Sedimentfraktionen aus der Einheit 30 der biologischen Wasseranreicherung, Denitrifikationsbiofilter und Nitrifikationsbiofilter abgeleitet. Dabei wurde das biologisch zu reinigende Wasservolumen durch den Wasserdurchflussmesser kontrolliert.

Gleichzeitig mit dem Ablauf des biologisch zu reinigenden Wassers wurde Frischwasser in das Becken mit den Wasserorganismen in dem Volumen hinzugegeben, das dem abgeleiteten gleich ist (das heißt 39,4 m³/Tag).

Die notwendige Sauerstoffkonzentration im wässrigen Medium, die für die Verwirklichung des vorliegenden Verfahrens der Anlage verwendet wird, wurde durch entsprechende Druckluftkompressoren 11 und 28 durchgeführt, und die Sauerstoffkonzentration im Wasser auf dem Eingang des Nitrifikationsbiofilters 5 wurde auf ein Niveau von nicht weniger als 5,5 mg/l eingestellt. Aufgrund der von Sauerstoffsensoren eingehenden Information (dank dem Funktionieren der Einheit 3 der biologischen Wasseranreicherung) wurde die Sauerstoffkonzentration im Eingang des Nitrifikationsbiofilters 5 auf einem Wert von 0,9 mg/l aufrechterhalten.

Die notwendige Kohlendioxydkonzentration im wässrigen Medium, die für die Verwirklichung des vorliegenden Verfahrens der Anlage verwendet wird, wurde aufgrund der Information des Kohlendioxydsensors und des ständigen Funktionierens der Nachlauf- und Steuereinheit von Wasserwerten aufrechterhalten, die die Leistung des ersten 11 und des zweiten Druckluftkompressors 28 einstellt. Durch die erwähnten Druckluftkompressoren wurde die Kohlendioxydkonzentration im Wasser im Eingang für die Wasserverschiebung im Mittel auf einen Wert von 16 mg/l eingestellt.

Nach der Reinigung des Nitrifikationsbiofilters, die bei der Anlage mit einem geschlossenen Zyklus der Wasserversorgung mit den angegebenen Werten verwendet wird, wurde das Becken mit den Wasserorganismen mit Glatt-Stör (Durchschnittsgewicht von 7,1 kg und Dichtheit bis 60 kg/m³) in der Gesamtbiomasse von 30000 kg besetzt.

Nach der Bespannung des Beckens mit den Wasserorganismen der Anlage mit einem geschlossenen Zyklus der Wasserversorgung mit Glatt-Stör mit einem Durchschnittsgewicht von 7,1 kg in einer Menge von 4225 Stück wurde die Fütterung dieser Wasserorganismen täglich durchgeführt. Die Fütterungsordnung der Wasserorganismen hat der im Beispiel 1 offenbarten Fütterungsordnung entsprochen.

Für die Effektivitätsbeurteilung des Nitrifikationsbiofilters bei den ausgewählten Durchlassbetrieben von zu reinigendem Wasser durch 1 m³ des Ansatzes und des Volumens des in das Becken mit den Wasserorganismen zugeführten Frischwassers wurde die Auswaage von 30 Stück Glatt-Stör zur Bestimmung der Biomasse von Glatt-Stör in diesem Becken mit den Wasserorganismen täglich durchgeführt.

Die untere Grenze des Rechenwerts der zu erwartenden Biomasse des Glatt-Störs im Becken mit den Wasserorganismen nach 30 Tagen der Aufzucht in der Anlage mit einem geschlossenen Zyklus der Wasserversorgung mit dem vorliegenden Betriebsverfahren des Nitrifikationsbiofilters sollte einen Wert von 32535 kg haben.

Das erreichte Ergebnis für das vorliegende Verfahren im Zeitraum von 30 Tagen der Aufzucht von Glatt-Stör ist in der Tabelle 5 dargestellt. Das Ergebnis bei der Aufzucht der Wasserorganismen in der Anlage mit einem geschlossenen Zyklus der Wasserversorgung unter Verwendung des Prototyp-Verfahrens für einen analogen Zeitraum betrug 20373 kg Biomasse.

**Tabelle 5**

| Bezeichnung des Verfahrens | Täglicher Zeitwert der Biomasse von Glatt-Stör im Becken (Fischkasten), kg | | | | | | | | | | Biomasse von Wasserorganismen zum Ende des Zeitraumes von der Aufzucht 30 Tage, kg |
|---|---|---|---|---|---|---|---|---|---|---|---|
| | *1 Tag* | *2 Tag* | *3 Tag* | *4 Tag* | *5 Tag* | *6 Tag* | *7 Tag* | *8 Tag* | *9 Tag* | *10 Tag* | |
| Vorliegendes Verfahren | 29915 | 29941 | 29975 | 30017 | 30068 | 30127 | 30194 | 30270 | 30365 | 30459 | 33663 |
| | *11 Tag* | *12 Tag* | *13 Tag* | *14 Tag* | *15 Tag* | *16 Tag* | *17 Tag* | *18 Tag* | *19 Tag* | *20 Tag* | |
| | 30629 | 30798 | 30968 | 31137 | 31171 | 31222 | 31290 | 31459 | 31629 | 31798 | |
| | *21 Tag* | *22 Tag* | *23 Tag* | *24 Tag* | *25 Tag* | *26 Tag* | *27 Tag* | *28 Tag* | *29 Tag* | *30 Tag* | |
| | 31985 | 32171 | 32358 | 32544 | 32731 | 32917 | 33104 | 33290 | 33477 | 33663 | |
| | *1 Tag* | *2 Tag* | *3 Tag* | *4 Tag* | *5 Tag* | *6 Tag* | *7 Tag* | *8 Tag* | *9 Tag* | *10 Tag* | |
| Prototyp-Verfahren | 29920 | 29824 | 29696 | 29536 | 29344 | 29119 | 28863 | 28574 | 28254 | 27933 | 20373 |
| | *11 Tag* | *12 Tag* | *13 Tag* | *14 Tag* | *15 Tag* | *16 Tag* | *17 Tag* | *18 Tag* | *19 Tag* | *20 Tag* | |
| | 27468 | 27049 | 26584 | 26118 | 25932 | 25653 | 25280 | 24815 | 24396 | 23930 | |
| | *21 Tag* | *22 Tag* | *23 Tag* | *24 Tag* | *25 Tag* | *26 Tag* | *27 Tag* | *28 Tag* | *29 Tag* | *30 Tag* | |
| | 23560 | 23226 | 22856 | 22448 | 22078 | 21781 | 21448 | 21077 | 20744 | 20373 | |

Ausgehend vom Datenvergleich aus der Tabelle 5 für das vorliegende Verfahren und für das Prototyp-Verfahren gewährleistet das vorliegende Betriebsverfahren des Nitrifikationsbiofilters bei der Aufzucht von Wasserorganismen in der Anlage mit einem geschlossenen Zyklus der Wasserversorgung ein sicheres Erreichen des genannten technischen Ergebnisses.

### Beispiel 6

Das vorliegende Betriebsverfahren des Nitrifikationsbiofilters bei der Aufzucht von Wasserorganismen in der Anlage mit einem geschlossenen Zyklus der Wasserversorgung wurde im Beispiel 6 auf der Anlage durchgeführt, die im Beispiel 1 beschrieben ist. In die bekannte Anlage waren Ergänzungen eingebracht, die auch im Beispiel 1 beschrieben sind.

Das Volumen des Kunststoffansatzes des Nitrifikationsbiofilters 5 betrug 13 m³. Das Gesamtwasservolumen im Becken mit den Wasserorganismen und dem Nitrifikationsbiofilter 5 betrug 225 m³.

Die Anlage mit einem geschlossenen Zyklus der Wasserversorgung war 12 Monate in Betrieb, und ihr Nitrifikationsbiofilter 5 wurde periodisch gereinigt. Vor der neuen Bespannung war sie auch der Reinigung unterworfen. Die Reinigungsprozedur vom Nitrifikationsbiofilter war der im Beispiel 1 beschriebenen Reinigungsprozedur analog.

Im oben erwähnten Belüftungskanal 6 wurde der Wasser-pH-Wert durch die Stabilisierungseinheit 9 des Wasser-pH-Werts auf einen Wert von 7,0 eingestellt (mittels einer dosierten Hinzufügung einer entsprechenden Menge an Alkali in das Wasser unter Verwendung der Stabilisierungseinheit 9 des Wasser-pH-Werts). Danach wurde die Oberfläche des durchfließenden Wassers aufgrund von Sensorwerten der Wasserklarheit durch die UV-Bestrahlungseinheit 7 mit Ultraviolettlicht mit einer Wellenlänge von 266 nm und einer Intensität von circa 50 mJ/cm² bestrahlt.

Das den Heißwasserbereiter 8 auffüllende Frischwasser wurde bis zu einer Temperatur erwärmt, die die Temperatur im Becken mit den Wasserorganismen auf einem Wert von circa 25°C aufrechterhalten ließ. Danach wurde es dem Belüftungskanal 6 zugeführt. Aus dem Belüftungskanal wurde das Wasser in die Hauptpumpe 10 geleitet. Daraus wurde dank der Arbeit der erwähnten Hauptpumpe 10 gereinigtes Wasser zum Eingang des Beckens mit Wasserorganismen verschoben. Die Förderleistung der Hauptpumpe 10 bei der Wasserzufuhr in das Becken mit den Wasserorganismen wurde so eingestellt, dass das biologisch zu reinigende Wasser nach der mechanischen Filterung mit einer Geschwindigkeit von 28 m³/h durch 1 m³ des Ansatzes des Nitrifikationsbiofilters 5 der Anlage mit einem geschlossenen Zyklus der Wasserversorgung zugeführt wird, die für die Ausführung des vorliegenden Verfahrens verwendet wird.

Vom Eingang des Nitrifikationsbiofilters 5 wurde durch das Wasserregelventil vom Wasserablauf ein Teil des Wassers (in einer Menge von 20,2 m³/Tag = 9% des biologisch zu reinigenden Wasservolumens) durch die Rohrleitung in die Ablaufeinheit für Abwasser und Sedimentfraktionen aus der Einheit 30 der biologischen Wasseranreicherung, Denitrifikationsbiofilter und Nitrifikationsbiofilter abgeleitet. Dabei wurde das biologisch zu reinigende Wasservolumen durch den Wasserdurchflussmesser kontrolliert.

Gleichzeitig mit dem Ablauf des biologisch zu reinigenden Wassers wurde Frischwasser in das Becken mit den Wasserorganismen in einem Volumen hinzugegeben, das dem abgeleiteten gleich ist (das heißt 20,2 m³/Tag).

Die notwendige Sauerstoffkonzentration im wässrigen Medium, die für die Verwirklichung des vorliegenden Verfahrens der Anlage verwendet wird, wurde durch entsprechende Druckluftkompressoren 11 und 28 durchgeführt, und die Sauerstoffkonzentration im Wasser im Eingang des Nitrifikationsbiofilters 5 wurde auf ein Niveau von nicht weniger als 5,5 mg/l eingestellt. Aufgrund der von Sauerstoffsensoren eingehenden Information dank dem Funktionieren der Einheit 3 der biologischen Wasseranreicherung wurde die Sauerstoffkonzentration im Eingang des Nitrifikationsbiofilters 5 auf einem Wert von 0,9 mg/l aufrechterhalten.

Die notwendige Kohlendioxydkonzentration im wässrigen Medium, die für die Verwirklichung des vorliegenden Verfahrens der Anlage verwendet wird, wurde aufgrund der Information des Kohlendioxydsensors und des ständigen Funktionierens der Nachlauf- und Steuereinheit von Wasserwerten aufrechterhalten, die die Leistung des ersten 11 und des zweiten Druckluftkompressors 28 einstellt. Durch die erwähnten Druckluftkompressoren wurde die Kohlendioxydkonzentration im Wasser im Eingang für die Wasserverschiebung im Mittel auf einen Wert von 16 mg/l eingestellt.

Nach der Reinigung des Nitrifikationsbiofilters, die bei der Anlage mit einem geschlossenen Zyklus der Wasserversorgung mit den angegebenen Werten verwendet wird, wurde das Becken mit den Wasserorganismen mit Hybriden des sibirischen und russischen Störs (Durchschnittsgewicht von 10,8 kg und Dichtheit bis 65 kg/m³) in der Gesamtbiomasse von 10000 kg besetzt.

Nach der Bespannung des Beckens mit den Wasserorganismen der Anlage mit einem geschlossenen Zyklus der Wasserversorgung mit Hybriden des sibirischen und russischen Störs mit einem Durchschnittsgewicht von 10,8 kg in einer Menge von 926 Stück wurde die Fütterung dieser Wasserorganismen täglich durchgeführt. Die Fütterungsordnung der Wasserorganismen hat der im Beispiel 1 offenbarten Fütterungsordnung entsprochen.

Für die Effektivitätsbeurteilung des Nitrifikationsbiofilters bei den ausgewählten Durchlassbetrieben von zu reinigendem Wasser durch 1 m³ des Ansatzes und des Volumens des in das Becken mit den Wasserorganismen zugeführten Frischwassers wurde die Auswaage von 30 Stück Hybriden des sibirischen und russischen Störs zur Bestimmung der Biomasse der Hybriden des sibirischen und russischen Störs in diesem Becken mit den Wasserorganismen täglich durchgeführt.

Die untere Grenze des Rechenwerts der zu erwartenden Biomasse der Hybriden des sibirischen und russischen Störs im Becken mit den Wasserorganismen nach 30 Tagen der Aufzucht in der Anlage mit einem geschlossenen Zyklus der Wasserversorgung mit dem vorliegenden Betriebsverfahren des Nitrifikationsbiofilters sollte einen Wert von 10648 kg haben.

Das erreichte Ergebnis für das vorliegende Verfahren im Zeitraum der Aufzucht der Hybriden des sibirischen und russischen Störs im Laufe von 30 Tagen ist in der Tabelle 6 dargestellt. Das Ergebnis bei der Aufzucht von den Wasserorganismen in der Anlage mit einem geschlossenen Zyklus der Wasserversorgung unter Verwendung des Prototyp-Verfahrens für einen analogen Zeitraum betrug 5143 kg Biomasse.

**Tabelle 6**

| Bezeichnung des Verfahrens | Täglicher Zeitwert der Biomasse von Hybriden des sibirischen und russischen Störs im Becken (Fischkasten), kg | | | | | | | | | | Biomasse von Wasserorganismen zum Ende des Zeitraumes von der Aufzucht 30 Tage, kg |
|---|---|---|---|---|---|---|---|---|---|---|---|
| | *1 Tag* | *2 Tag* | *3 Tag* | *4 Tag* | *5 Tag* | *6 Tag* | *7 Tag* | *8 Tag* | *9 Tag* | *10 Tag* | |
| Vorliegendes Verfahren | 9978 | 9985 | 9994 | 10004 | 10017 | 10032 | 10050 | 10069 | 10101 | 10132 | 10672 |
| | *11 Tag* | *12 Tag* | *13 Tag* | *14 Tag* | *15 Tag* | *16 Tag* | *17 Tag* | *18 Tag* | *19 Tag* | *20 Tag* | |
| | 10163 | 10194 | 10224 | 10255 | 10263 | 10276 | 10294 | 10324 | 10355 | 10385 | |
| | 21 *Tag* | 22 *Tag* | *23 Tag* | 24 *Tag* | 25 *Tag* | 26 *Tag* | *27 Tag* | *28 Tag* | *29 Tag* | *30 Tag* | |
| | 10414 | 10443 | 10471 | 10500 | 10528 | 10557 | 10586 | 10614 | 10643 | 10672 | |
| | *1 Tag* | *2 Tag* | *3 Tag* | *4 Tag* | *5 Tag* | *6 Tag* | 7 *Tag* | *8 Tag* | *9 Tag* | *10 Tag* | |
| Prototyp-Verfahren | 9983 | 9930 | 9859 | 9769 | 9662 | 9537 | 9395 | 9234 | 9056 | 8877 | 5143 |
| | *11 Tag* | *12 Tag* | *13 Tag* | *14 Tag* | *15 Tag* | *16 Tag* | *17 Tag* | *18 Tag* | *19 Tag* | *20 Tag* | |
| | 8659 | 8462 | 8244 | 8026 | 7938 | 7807 | 7632 | 7414 | 7218 | 6999 | |
| | *21 Tag* | *22 Tag* | *23 Tag* | *24 Tag* | *25 Tag* | *26 Tag* | 27 *Tag* | *28 Tag* | *29 Tag* | *30 Tag* | |
| | 6806 | 6632 | 6438 | 6226 | 6032 | 5877 | 5703 | 5510 | 5336 | 5143 | |

Ausgehend vom Datenvergleich aus der Tabelle 6 für das vorliegende Verfahren und für das Prototyp-Verfahren gewährleistet das vorliegende Betriebsverfahren des Nitrifikationsbiofilters bei der Aufzucht von Wasserorganismen in der Anlage mit einem geschlossenen Zyklus der Wasserversorgung ein sicheres Erreichen des genannten technischen Ergebnisses.

### Beispiel 7

Das vorliegende Betriebsverfahren des Nitrifikationsbiofilters bei der Aufzucht von Wasserorganismen in der Anlage mit einem geschlossenen Zyklus der Wasserversorgung wurde im Beispiel 7 auf der Anlage durchgeführt, die im Beispiel 1 beschrieben ist. In die bekannte Anlage waren Ergänzungen angebracht, die auch im Beispiel 1 beschrieben sind.

Das Wasservolumen im Becken mit den Wasserorganismen betrug 333 m³. Das Volumen des Kunststoffansatzes des Nitrifikationsbiofilters 5 betrug 26 m³. Das Gesamtwasservolumen im Becken mit den Wasserorganismen und dem Nitrifikationsbiofilter 5 betrug 487 m³.

Die Anlage mit einem geschlossenen Zyklus der Wasserversorgung war 15 Monate in Betrieb, und ihr Nitrifikationsbiofilter 5 wurde periodisch gereinigt. Vor der neuen Bespannung war sie auch der Reinigung unterworfen. Die Reinigungsprozedur des Nitrifikationsbiofilters war der im Beispiel. 1 beschriebenen Reinigungsprozedur analog.

Im Belüftungskanal 6 wurde der Wasser-pH-Wert durch die Stabilisierungseinheit 9 für den Wasser-pH-Wert auf einen Wert von 7,0 eingestellt (mittels einer dosierten Hinzufügung einer entsprechenden Menge an Alkali in das Wasser unter Verwendung der Stabilisierungseinheit 9 für den Wasser-pH-Wert). Danach wurde die Oberfläche des durchfließenden Wassers aufgrund von Sensorwerten der Wasserklarheit durch die UV-Bestrahlungseinheit 7 mit Ultraviolettlicht mit einer Wellenlänge von 266 nm und einer Intensität von circa 50 mJ/cm² bestrahlt.

Das den Heißwasserbereiter 8 auffüllende Frischwasser wurde bis zu einer Temperatur erwärmt, die die Temperatur im Becken mit den Wasserorganismen bei einem Wert von circa 26°C aufrechterhalten ließ. Danach wurde es dem Belüftungskanal 6 zugeführt. Aus dem Belüftungskanal wurde das Wasser in die Hauptpumpe 10 geleitet. Daraus wurde dank der Arbeit der erwähnten Hauptpumpe 10 gereinigtes Wasser zum Eingang des Beckens mit den Wasserorganismen verschoben. Die Förderleistung der Hauptpumpe 10 bei der Wasserzufuhr in das Becken mit den Wasserorganismen wurde so eingestellt, dass das biologisch zu reinigende Wasser nach der mechanischen Filterung mit einer Geschwindigkeit von 28,05 m³/h durch 1 m³ des Ansatzes des Nitrifikationsbiofilters 5 der Anlage mit einem geschlossenen Zyklus der Wasserversorgung zugeführt wird, die für die Ausführung des vorgeschlagenen Verfahrens verwendet wird.

Vom Eingang des Nitrifikationsbiofilters 5 wurde durch das Wasserregelventil vom Wasserablauf ein Teil des Wassers (in einer Menge von 31,6 m³/Tag = 7% des biologisch zu reinigenden Wasservolumens) durch die Rohrleitung in die Ablaufeinheit für Abwasser und Sedimentfraktionen aus der Einheit 30 der biologischen Wasseranreicherung, Denitrifikationsbiofilter und Nitrifikationsbiofilter abgeleitet. Dabei wurde das biologisch zu reinigende Wasservolumen durch den Wasserdurchflussmesser kontrolliert.

Gleichzeitig mit dem Ablauf des biologisch zu reinigenden Wassers wurde Frischwasser in das Becken mit den Wasserorganismen mit einem Volumen hinzugegeben, das dem abgeleiteten gleich ist (das heißt 31,6 m³/Tag).

Die notwendige Sauerstoffkonzentration im wässrigen Medium, die für die Verwirklichung des vorliegenden Verfahrens der Anlage verwendet wird, wurde durch entsprechende Druckluftkompressoren 11 und 28 durchgeführt, und die Sauerstoffkonzentration im Wasser im Eingang des Nitrifikationsbiofilters 5 wurde auf ein Niveau von nicht weniger als 5,5 mg/l eingestellt. Aufgrund der von Sauerstoffsensoren eingehenden Information dank dem Funktionieren der Einheit 3 der biologischen Wasseranreicherung wurde die Sauerstoffkonzentration im Eingang des Nitrifikationsbiofilters 5 auf einem Wert von 0,9 mg/l aufrechterhalten.

Die notwendige Kohlendioxydkonzentration im wässrigen Medium, die für die Verwirklichung des vorliegenden Verfahrens der Anlage verwendet wird, wurde aufgrund der Information des Kohlendioxydsensors und des ständigen Funktionierens der Nachlauf- und Steuereinheit von Wasserwerten aufrechterhalten, die die Leistung des ersten 11 und des zweiten Druckluftkompressors 28 einstellt. Durch die erwähnten Druckluftkompressoren wurde die Kohlendioxydkonzentration im Wasser im Eingang für die Wasserverschiebung im Mittel auf einen Wert von 16 mg/l eingestellt.

Nach der Reinigung des Nitrifikationsbiofilters, die bei der Anlage mit einem geschlossenen Zyklus der Wasserversorgung mit den angegebenen Werten verwendet wird, wurde das Becken mit den Wasserorganismen mit Hausen (Durchschnittsgewicht von 15 kg und einer Dichtheit bis 72 kg/m³) und in der Gesamtbiomasse von 24000 kg besetzt.

Nach der Bespannung des Beckens mit den Wasserorganismen der Anlage mit einem geschlossenen Zyklus der Wasserversorgung mit Hausen mit einem Durchschnittsgewicht von 15 kg in einer Menge von 1600 Stück wurde die Fütterung dieser Wasserorganismen täglich durchgeführt. Die Fütterungsordnung der Wasserorganismen hat der im Beispiel 1 offenbarten Fütterungsordnung entsprochen.

Für die Effektivitätsbeurteilung des Nitrifikationsbiofilters bei den ausgewählten Durchlassbetrieben des zu reinigenden Wassers durch 1 m³ des Ansatzes und des Volumens des in das Becken mit den Wasserorganismen zugeführten Frischwassers wurde die Auswaage von 30 Stück Hausen zur Bestimmung der Biomasse von Hausen in diesem Becken mit den Wasserorganismen täglich durchgeführt.

Die untere Grenze des Rechenwerts der zu erwartenden Biomasse von Hausen im Becken mit den Wasserorganismen nach 30 Tagen der Aufzucht in der Anlage mit einem geschlossenen Zyklus der Wasserversorgung mit dem vorliegenden Betriebsverfahren des Nitrifikationsbiofilters sollte einen Wert von 25440 kg haben.

Das erreichte Ergebnis für das vorliegende Verfahren im Zeitraum der Aufzucht von Hausen im Laufe von 30 Tagen ist in der Tabelle 7 dargestellt. Das Ergebnis bei der Aufzucht von den Wasserorganismen in der Anlage mit einem geschlossenen Zyklus der Wasserversorgung unter Verwendung des Prototyp-Verfahrens für einen analogen Zeitraum betrug 11427 kg Biomasse.

**Tabelle 7**

| Bezeichnung des Verfahrens | Täglicher Zeitwert der Biomasse von Hausen im Becken (Fischkasten), kg | | | | | | | | | | Biomasse von Wasserorganismen zum Ende des Zeitraumes von der Aufzucht 30 Tage, kg |
|---|---|---|---|---|---|---|---|---|---|---|---|
| | *1 Tag* | *2 Tag* | *3 Tag* | *4 Tag* | *5 Tag* | *6 Tag* | *7 Tag* | *8 Tag* | *9 Tag* | *10 Tag* | |
| Vorliegendes Verfahren | 23952 | 23966 | 23986 | 24010 | 24038 | 24072 | 24110 | 24154 | 24212 | 24270 | 25357 |
| | *11 Tag* | *12 Tag* | *13 Tag* | *14 Tag* | *15 Tag* | *16 Tag* | *17 Tag* | *18 Tag* | *19 Tag* | *20 Tag* | |
| | 24338 | 24406 | 24474 | 24542 | 24561 | 24590 | 24628 | 24696 | 24764 | 24832 | |
| | *21 Tag* | *22 Tag* | *23 Tag* | *24 Tag* | *25 Tag* | *26 Tag* | *27 Tag* | *28 Tag* | *29 Tag* | *30 Tag* | |
| | 24902 | 24972 | 25042 | 25112 | 25182 | 25203 | 25231 | 25266 | 25308 | 25357 | |
| | *1 Tag* | *2 Tag* | *3 Tag* | *4 Tag* | *5 Tag* | *6 Tag* | *7 Tag* | *8 Tag* | *9 Tag* | *10 Tag* | |
| Prototyp-Verfahren | 23957 | 23907 | 23840 | 23757 | 23656 | 23540 | 23406 | 23256 | 23089 | 22922 | 11427 |
| | *11 Tag* | *12 Tag* | *13 Tag* | *14 Tag* | *15 Tag* | *16 Tag* | *17 Tag* | *18 Tag* | *19 Tag* | *20 Tag* | |
| | 22330 | 21797 | 21205 | 20613 | 20376 | 20021 | 19547 | 18955 | 18422 | 17830 | |
| | *21 Tag* | *22 Tag* | *23 Tag* | *24 Tag* | *25 Tag* | *26 Tag* | *27 Tag* | *28 Tag* | *29 Tag* | *30 Tag* | |
| | 17163 | 16563 | 15896 | 15162 | 14495 | 13962 | 13362 | 12695 | 12094 | 11427 | |

Ausgehend vom Datenvergleich aus der Tabelle 7 für das vorliegende Verfahren und für das Prototyp-Verfahren gewährleistet das vorliegende Betriebsverfahren des Nitrifikationsbiofilters bei der Aufzucht von Wasserorganismen in der Anlage mit einem geschlossenen Zyklus der Wasserversorgung ein sicheres Erreichen des genannten technischen Ergebnisses.

### Beispiel 8

Das vorliegende Betriebsverfahren des Nitrifikationsbiofilters bei der Aufzucht von Wasserorganismen in der Anlage mit einem geschlossenen Zyklus der Wasserversorgung wurde im Beispiel 8 auf der Anlage durchgeführt, die im Beispiel 1 beschrieben ist. In die bekannte Anlage waren Ergänzungen eingebracht, die auch im Beispiel 1 beschrieben sind.

Das Wasservolumen im Becken mit den Wasserorganismen betrug 325 m³. Das Volumen des Kunststoffansatzes des Nitrifikationsbiofilters 5 betrug 18 m³. Das Gesamtwasservolumen im Becken mit den Wasserorganismen und dem Nitrifikationsbiofilter 5 betrug 475 m³.

Die Anlage mit einem geschlossenen Zyklus der Wasserversorgung war 15 Monate in Betrieb, und ihr Nitrifikationsbiofilter 5 wurde periodisch gereinigt. Vor der neuen Bespannung war sie auch der Reinigung unterworfen. Die Reinigungsprozedur des Nitrifikationsbiofilters war der im Beispiel 1 beschriebenen Reinigungsprozedur analog.

Im oben erwähnten Belüftungskanal 6 wurde der Wasser-pH-Wert durch die Stabilisierungseinheit 9 für den Wasser-pH-Wert auf einen Wert von 7,0 eingestellt (mittels einer dosierten Hinzufügung einer entsprechenden Menge an Alkali in das Wasser unter Verwendung der Stabilisierungseinheit 9 für den Wasser-pH-Wert). Danach wurde die Oberfläche des durchfließenden Wassers aufgrund von Sensorwerten der Wasserklarheit durch die UV-Bestrahlungseinheit 7 mit Ultraviolettlicht mit einer Wellenlänge von 266 nm und einer Intensität von circa 50 mJ/cm² bestrahlt.

Das den Heißwasserbereiter 8 auffüllende Frischwasser wurde bis zu einer Temperatur erwärmt, die die Temperatur im Becken mit den Wasserorganismen auf einen Wert von circa 26°C aufrechterhalten ließ. Danach wurde es dem Belüftungskanal 6 zugeführt. Aus dem Belüftungskanal 6 wurde das Wasser in die Hauptpumpe 10 geleitet. Daraus wurde dank der Arbeit der erwähnten Hauptpumpe 10 gereinigtes Wasser zum Eingang des Beckens mit den Wasserorganismen verschoben. Die Förderleistung der Hauptpumpe 10 bei der Wasserzufuhr in das Becken mit den Wasserorganismen wurde so eingestellt, dass das biologisch zu reinigende Wasser nach der mechanischen Filterung mit einer Geschwindigkeit von 16 m³/h durch 1 m³ des Ansatzes des Nitrifikationsbiofilters 5 der Anlage mit einem geschlossenen Zyklus der Wasserversorgung zugeführt wird, die für die Ausführung des vorliegenden Verfahrens verwendet wird.

Vom Eingang des Nitrifikationsbiofilters 5 wurde durch das Wasserregelventil des Wasserablaufs ein Teil des Wassers (in einer Menge von 23,7 m³/Tag = 5% des biologisch zu reinigenden Wasservolumens) durch die Rohrleitung in die Ablaufeinheit für Abwasser und Sedimentfraktionen aus der Einheit 30 der biologischen Wasseranreicherung, Denitrifikationsbiofilter und Nitrifikationsbiofilter abgeleitet. Dabei wurde das biologisch zu reinigende Wasservolumen durch den Wasserdurchflussmesser kontrolliert.

Gleichzeitig mit dem Ablauf des biologisch zu reinigenden Wassers wurde Frischwasser in das Becken mit den Wasserorganismen mit einem Volumen hinzugegeben, das dem abgeleiteten gleich ist (das heißt 23,7 m³/Tag).

Die notwendige Sauerstoffkonzentration im wässrigen Medium, die für die Verwirklichung des vorliegenden Verfahrens der Anlage verwendet wird, wurde durch entsprechende Druckluftkompressoren 11 und 28 durchgeführt, und die Sauerstoffkonzentration im Wasser im Eingang des Nitrifikationsbiofilters 5 wurde auf ein Niveau von nicht weniger als 5,5 mg/l eingestellt. Aufgrund der von Sauerstoffsensoren eingehenden Information dank dem Funktionieren der Einheit 3 der biologischen Wasseranreicherung wurde die Sauerstoffkonzentration im Eingang des Nitrifikationsbiofilters 5 auf einem Wert von 0,9 mg/l aufrechterhalten.

Die notwendige Kohlendioxydkonzentration im wässrigen Medium, die für die Verwirklichung des vorliegenden Verfahrens der Anlage verwendet wird, wurde aufgrund der Information des Kohlendioxydsensors und des ständigen Funktionierens der Nachlauf- und Steuereinheit von Wasserwerten aufrechterhalten, die die Leistung des ersten 11 und des zweiten Druckluftkompressors 28 einstellt. Durch die erwähnten Druckluftkompressoren wurde die Kohlendioxydkonzentration im Wasser im Eingang für die Wasserverschiebung im Mittel auf einen Wert von 16 mg/l eingestellt.

Nach der Reinigung des Nitrifikationsbiofilters, die bei der Anlage mit einem geschlossenen Zyklus der Wasserversorgung mit den angegebenen Werten verwendet wird, wurde das Becken mit den Wasserorganismen mit Kalugahausen (Durchschnittsgewicht von 21,5 kg und einer Dichtheit bis 60 kg/m³) in der Gesamtbiomasse von 19500 kg besetzt.

Nach der Bespannung des Beckens mit den Wasserorganismen der Anlage mit einem geschlossenen Zyklus der Wasserversorgung mit Kalugahausen mit einem Durchschnittsgewicht von 21,5 kg in einer Menge von 907 Stück wurde die Fütterung dieser Wasserorganismen täglich durchgeführt. Die Fütterungsordnung der Wasserorganismen hat der im Beispiel 1 offenbarten Fütterungsordnung entsprochen.

Für die Effektivitätsbeurteilung des Nitrifikationsbiofilters bei den ausgewählten Durchlassbetrieben von zu reinigendem Wasser durch 1 m³ des Ansatzes und des Volumens des in das Becken mit den Wasserorganismen zugeführten Frischwassers wurde die Auswaage von 30 Stück Kalugahausen zur Bestimmung der Biomasse der Kalugahausen in diesem Becken mit den Wasserorganismen täglich durchgeführt.

Die untere Grenze des Rechenwerts der zu erwartenden Biomasse der Kalugahausen im Becken mit den Wasserorganismen nach 30 Tagen der Aufzucht in der Anlage mit einem geschlossenen Zyklus der Wasserversorgung mit dem vorliegenden Betriebsverfahren des Nitrifikationsbiofilters sollte einen Wert von 20498 kg haben.

Das erreichte Ergebnis für das vorliegende Verfahren im Zeitraum der Aufzucht der Kalugahausen im Laufe von 30 Tagen ist in der Tabelle 8 dargestellt.

Das Ergebnis bei der Aufzucht der Wasserorganismen in der Anlage mit einem geschlossenen Zyklus der Wasserversorgung unter Verwendung des Prototyp-Verfahrens für einen analogen Zeitraum betrug 15441 kg Biomasse.

**Tabelle 8**

| Bezeichnung des Verfahrens | Täglicher Zeitwert der Biomasse von Kalugahausen im Becken (Fischkasten), kg | | | | | | | | | | Biomasse von Wasserorganismen zum Ende des Zeitraumes von der Aufzucht 30 Tage, kg |
|---|---|---|---|---|---|---|---|---|---|---|---|
| | *1 Tag* | *2 Tag* | *3 Tag* | *4 Tag* | *5 Tag* | *6 Tag* | *7 Tag* | *8 Tag* | *9 Tag* | *10 Tag* | |
| Vorliegendes Verfahren | 19467 | 19470 | 19473 | 19477 | 19480 | 19483 | 19487 | 19490 | 19494 | 19499 | 20124 |
| | *11 Tag* | *12 Tag* | *13 Tag* | *14 Tag* | *15 Tag* | *16 Tag* | *17 Tag* | *18 Tag* | *19 Tag* | *20 Tag* | |
| | 19517 | 19536 | 19554 | 19572 | 19576 | 19579 | 19582 | 19600 | 19619 | 19637 | |
| | *21 Tag* | *22 Tag* | *23 Tag* | *24 Tag* | *25 Tag* | *26 Tag* | *27 Tag* | *28 Tag* | *29 Tag* | *30 Tag* | |
| | 19686 | 19734 | 19783 | 19832 | 19880 | 19929 | 19978 | 20026 | 20075 | 20124 | |
| | *1 Tag* | *2 Tag* | *3 Tag* | *4 Tag* | *5 Tag* | *6 Tag* | *7 Tag* | *8 Tag* | *9 Tag* | *10 Tag* | |
| Prototyp-Verfahren | 19472 | 19417 | 19345 | 19254 | 19145 | 19017 | 18872 | 18708 | 18527 | 18345 | 15441 |
| | *11 Tag* | *12 Tag* | *13 Tag* | *14 Tag* | *15 Tag* | *16 Tag* | *17 Tag* | *18 Tag* | *19 Tag* | *20 Tag* | |
| | 18175 | 18022 | 17853 | 17683 | 17615 | 17513 | 17377 | 17208 | 17055 | 16885 | |
| | *21 Tag* | *22 Tag* | *23 Tag* | *24 Tag* | *25 Tag* | *26 Tag* | *27 Tag* | *28 Tag* | *29 Tag* | *30 Tag* | |
| | 16757 | 16642 | 16486 | 16315 | 16159 | 16034 | 15894 | 15738 | 15597 | 15441 | |

Ausgehend vom Datenvergleich aus der Tabelle 8 für das vorliegende Verfahren und für das Prototyp-Verfahren gewährleistet das vorliegende Betriebsverfahren des Nitrifikationsbiofilters bei der Aufzucht von Wasserorganismen in der Anlage mit einem geschlossenen Zyklus der Wasserversorgung ein sicheres Erreichen des vorliegenden technischen Ergebnisses.

### Beispiel 9

Das vorliegende Betriebsverfahren des Nitrifikationsbiofilters bei der Aufzucht von Wasserorganismen in der Anlage mit einem geschlossenen Zyklus der Wasserversorgung wurde im Beispiel 9 auf der Anlage durchgeführt, die im Gebrauchsmusterpatent RU Nr. 153081 (veröffentlicht am 17. Juli 2015, Protokoll Nr. 19) offenbart ist. Sie besteht aus einem Stabilisationswasserkasten 1 (Figur), einem Block der mechanischen Filterung 2 (Figur), einer Einheit 3 der biologischen Wasseranreicherung, einem Denitrifikationsbiofilter 4, einem Nitrifikationsbiofilter 5, einem Belüftungskanal 6, einer UV-Bestrahlungseinheit 7, einem Heißwasserbereiter 8, einer Stabilisierungseinheit 9 für den Wasser-pH-Wert, einer Hauptpumpe 10, einem erstem Druckluftkompressor 11, einem Fischkasten 12, einem Reservewasserkasten 27, einem zweiten Druckluftkompressor 28, einer Zulaufeinheit von Frischwasser 29, einer Ablaufeinheit für Abwasser und Sedimentfraktionen aus der Einheit der biologischen Wasseranreicherung, Denitrifikationsbiofilter und Nitrifikationsbiofilter, einem ersten Schütz 31, einem zweiten Schütz 32, einem dritten Schütz 33, einer Schichtenautomatikeinheit 34, einer Nachlauf- und Steuereinheit 35 von Wasserwerten und einer Entleerungspumpe von Sedimentfraktionen aus der Einheit 36 der biologischen Wasseranreicherung, Denitrifikationsbiofilter und Nitrifikationsbiofilter.

In der oben erwähnten Anlage (Figur) waren folgende Ergänzungen angebracht : Im Eingang des Nitrifikationsbiofilters 5 war ein Wasserablauf 5.2 montiert, der mit einem folgegemäß untereinander verbundenen Wasserregelventil 5.2.1 und einem Wasserdurchflussmesser 5.2.2 versorgt ist und von der Rohrleitung mit der Ablaufeinheit für Abwasser und Sedimentfraktionen aus der Einheit 30 der biologischen Wasseranreicherung, Denitrifikationsbiofilter und Nitrifikationsbiofilter verbunden ist. Zum Fischkasten 12 , das heißt zum Becken mit den Wasserorganismen, war eine Rohrleitung 12.1. zugeführt, die mit einem folgegemäß untereinander verbundenen Wasserregelventil 12.1.1 und einem Wasserdurchflussmesser 12.1.2 versorgt ist und die mit der Zulaufeinheit 29 für Frischwasser verbunden ist. Das Wasservolumen im Becken mit den Wasserorganismen betrug 41 m³. Das Volumen des Kunststoffansatzes des Nitrifikationsbiofilter 5 betrug 24 m³. Das Gesamtwasservolumen im Becken mit den Wasserorganismen und dem Nitrifikationsbiofilter 5 betrug 100 m³.

Die Anlage mit einem geschlossenen Zyklus der Wasserversorgung in war 14 Monate in Betrieb, und ihr Nitrifikationsbiofilter 5 wurde periodisch gereinigt. Vor der neuen Bespannung war sie auch der Reinigung unterworfen. Die Reinigungsprozedur war der im Beispiel 1 beschriebenen Reinigungsprozedur analog.

Im oben erwähnten Belüftungskanal 6 wurde der Wasser-pH-Wert durch die Stabilisierungseinheit 9 für den Wasser-pH-Wert auf einen Wert von 7,0 eingestellt (mittels einer dosierten Hinzufügung einer entsprechenden Menge an Alkali in das Wasser unter Verwendung der Stabilisierungseinheit 9 für den Wasser-pH-Wert). Danach wurde die Oberfläche des durchfließenden Wassers aufgrund von Sensorwerten der Wasserklarheit durch die UV-Bestrahlungseinheit 7 mit Ultraviolettlicht mit einer Wellenlänge von 266 nm und einer Intensität von circa 50 mJ/cm² bestrahlt.

Das den Heißwasserbereiter 8 auffüllende Frischwasser wurde bis zu einer Temperatur erwärmt, die die Temperatur im Becken mit den Wasserorganismen bei einem Wert von circa 28°C aufrechterhalten ließ. Danach wurde es dem Belüftungskanal 6 zugeführt. Aus dem Belüftungskanal wurde das Wasser in die Hauptpumpe 10 geleitet. Daraus wurde dank der Arbeit der erwähnten Hauptpumpe 10 gereinigtes Wasser zum Eingang des Beckens mit den Wasserorganismen verschoben. Die Förderleistung der Hauptpumpe 10 bei der Wasserzufuhr in das Becken mit den Wasserorganismen wurde so eingestellt, dass das biologisch zu reinigende Wasser nach der mechanischen Filterung mit einer Geschwindigkeit von 3 m³/h durch 1 m³ des Ansatzes des Nitrifikationsbiofilters 5 der Anlage mit einem geschlossenen Zyklus der Wasserversorgung zugeführt wird, die für die Ausführung des vorliegenden Verfahrens verwendet wird.

Vom Eingang des Nitrifikationsbiofilters 5 wurde durch das Wasserregelventil 5.2.1 vom Wasserablauf 5.2 ein Teil des Wassers (in einer Menge von 8 m³/Tag = 8% des biologisch zu reinigenden Wasservolumens) durch die Rohrleitung in die Ablaufeinheit für Abwasser und Sedimentfraktionen aus der Einheit 30 der biologischen Wasseranreicherung, Denitrifikationsbiofilter und Nitrifikationsbiofilter abgeleitet. Dabei wurde das biologisch zu reinigende Wasservolumen durch den Wasserdurchflussmesser 5.2.2 kontrolliert.

Gleichzeitig mit dem Ablauf des biologisch zu reinigenden Wassers wurde Frischwasser in das Becken mit den Wasserorganismen mit einem Volumen hinzugegeben, das dem abgeleiteten entspricht (das heißt 8 m³/Tag).

Die notwendige Sauerstoffkonzentration im wässrigen Medium, die für die Verwirklichung des vorliegenden Verfahrens der Anlage in verwendet wird, wurde durch entsprechende Druckluftkompressoren 11 und 28 durchgeführt, und die Sauerstoffkonzentration im Wasser im Eingang des Nitrifikationsbiofilters 5 wurde auf ein Niveau von nicht weniger als 5,5 mg/l eingestellt. Aufgrund der von Sauerstoffsensoren eingehenden Information dank dem Funktionieren der Einheit 3 der biologischen Wasseranreicherung wurde die Sauerstoffkonzentration im Eingang des Nitrifikationsbiofilters 5 bei einem Wert von 0,9 mg/l aufrechterhalten.

Die notwendige Kohlendioxydkonzentration im wässrigen Medium, die für die Verwirklichung des vorliegenden Verfahrens der Anlage verwendet wird, wurde aufgrund der Information des Kohlendioxydsensors und des ständigen Funktionierens der Nachlauf- und Steuereinheit von Wasserwerten aufrechterhalten, die die Leistung vom ersten und zweiten Druckluftkompressor 11 und 28 einstellt. Durch die erwähnten Druckluftkompressoren wurde die Kohlendioxydkonzentration im Wasser im Eingang für die Wasserverschiebung im Mittel auf einen Wert von18 mg/l eingestellt.

Nach der Reinigung des Nitrifikationsbiofilters, die bei der Anlage mit einem geschlossenen Zyklus der Wasserversorgung mit den angegebenen Werten verwendet wird, wurde das Becken mit den Wasserorganismen mit afrikanischem Wels (Durchschnittsgewicht von 0,9 kg und einer Dichtheit von bis 250 kg/m³) in einer Gesamtbiomasse von 10200 kg besetzt.

Nach der Bespannung des Beckens mit den Wasserorganismen der Anlage mit einem geschlossenen Zyklus der Wasserversorgung mit afrikanischem Wels mit einem Durchschnittsgewicht von 0,9 kg in einer Menge von 11332 Stück wurde die Fütterung dieser Wasserorganismen täglich durchgeführt. Die Fütterungsordnung der Wasserorganismen hat der im Beispiel 1 offenbarten Fütterungsordnung entsprochen.

Für die Effektivitätsbeurteilung des Nitrifikationsbiofilters bei den ausgewählten Durchlassbetrieben von zu reinigendem Wasser durch 1 m³ des Ansatzes und des Volumens des in das Becken mit den Wasserorganismen zugeführten Frischwassers wurde eine Auswaage von 50 Stück des afrikanischen Welses zur Bestimmung der Biomasse afrikanischen Welses in diesem Becken mit den Wasserorganismen täglich durchgeführt.

Die untere Grenze des Rechenwerts der zu erwartenden Biomasse von afrikanischem Wels im Becken mit den Wasserorganismen nach 30 Tagen der Aufzucht in der Anlage mit einem geschlossenen Zyklus der Wasserversorgung mit dem vorliegenden Betriebsverfahren des Nitrifikationsbiofilters sollte einen Wert von 13600 kg haben.

Das erreichte Ergebnis für das vorliegende Verfahren im Zeitraum der Aufzucht von afrikanischem Wels im Laufe von 30 Tagen ist in der Tabelle 9 dargestellt. Das Ergebnis bei der Aufzucht von Wasserorganismen in der Anlage mit einem geschlossenen Zyklus der Wasserversorgung mit der Verwendung des Prototyp-Verfahrens für einen analogen Zeitraum betrug 13504 kg Biomasse.

**Tabelle 9**

| Bezeichnung des Verfahrens | Täglicher Zeitwert der Biomasse von afrikanischem Wels im Becken (Fischkasten), kg | | | | | | | | | | Biomasse von Wasserorganismen zum Ende des Zeitraumes von der Aufzucht, kg |
|---|---|---|---|---|---|---|---|---|---|---|---|
| | *1 Tag* | *2 Tag* | *3 Tag* | *4 Tag* | *5 Tag* | *6 Tag* | 7 *Tag* | *8 Tag* | *9 Tag* | *10 Tag* | |
| Vorliegendes Verfahren | 10087 | 10121 | 10166 | 10223 | 10291 | 10370 | 10461 | 10563 | 10681 | 10799 | 13850 |
| | *11 Tag* | *12 Tag* | *13 Tag* | *14 Tag* | *15 Tag* | *16 Tag* | *17 Tag* | *18 Tag* | *19 Tag* | *20 Tag* | |
| | 10973 | 11146 | 11319 | 11493 | 11538 | 11606 | 11697 | 11870 | 12043 | 12217 | |
| | *21 Tag* | *22 Tag* | *23 Tag* | *24 Tag* | *25 Tag* | *26 Tag* | *27 Tag* | *28 Tag* | *29 Tag* | *30 Tag* | |
| | 12380 | 12543 | 12707 | 12870 | 13033 | 13197 | 13360 | 13523 | 13687 | 13850 | |
| | *1 Tag* | *2 Tag* | *3 Tag* | *4 Tag* | *5 Tag* | *6 Tag* | *7 Tag* | *8 Tag* | *9 Tag* | *10 Tag* | |
| Prototyp-Verfahren | 10092 | 10124 | 10168 | 10222 | 10287 | 10363 | 10449 | 10547 | 10675 | 10803 | 13504 |
| | *11 Tag* | *12 Tag* | *13 Tag* | *14 Tag* | *15 Tag* | *16 Tag* | *17 Tag* | *18 Tag* | *19 Tag* | *20 Tag* | |
| | 10942 | 11080 | 11218 | 11357 | 11412 | 11495 | 11606 | 11744 | 11882 | 12021 | |
| | *21 Tag* | *22 Tag* | *23 Tag* | *24 Tag* | *25 Tag* | *26 Tag* | *27 Tag* | *28 Tag* | *29 Tag* | *30 Tag* | |
| | 12169 | 12317 | 12466 | 12614 | 12762 | 12911 | 13059 | 13207 | 13356 | 13504 | |

Ausgehend vom Datenvergleich aus der Tabelle 9 für das vorliegende Verfahren und für das Prototyp-Verfahren gewährleistet das vorliegende Betriebsverfahren des Nitrifikationsbiofilters bei der Aufzucht von Wasserorganismen in der Anlage mit einem geschlossenen Zyklus der Wasserversorgung ein sicheres Erreichen des genannten technischen Ergebnisses.

### Beispiel 10

Die Ausführung des vorliegenden Betriebsverfahrens des Nitrifikationsbiofilters bei der Aufzucht von Wasserorganismen in der Anlage mit einem geschlossenen Zyklus der Wasserversorgung wurde im Beispiel 10 auf der Anlage durchgeführt, die im Beispiel 9 beschrieben ist.

In die oben erwähnte Anlage (Figur) waren folgende Ergänzungen angebracht, die auch im Beispiel 9 beschrieben sind.

Das Wasservolumen im Becken mit den Wasserorganismen betrug 25 m³. Das Volumen des Kunststoffansatzes des Nitrifikationsbiofilter 5 betrug 12 m³. Das Gesamtwasservolumen in dem Becken mit den Wasserorganismen und dem Nitrifikationsbiofilter 5 betrug 87 m³.

Die Anlage mit einem geschlossenen Zyklus der Wasserversorgung in war 15 Monate in Betrieb, und ihr Nitrifikationsbiofilter 5 wurde periodisch gereinigt. Vor der neuen Bespannung war sie auch der Reinigung unterworfen. Die Reinigungsprozedur war der im Beispiel 1 beschriebenen Reinigungsprozedur analog.

Im Belüftungskanal 6 wurde der Wasser-pH-Wert durch die Stabilisierungseinheit 9 für den Wasser- pH-Wert auf einen Wert von 7,0 eingestellt (mittels einer dosierten Hinzufügung einer entsprechenden Menge an Alkali in das Wasser unter Verwendung der Stabilisierungseinheit 9 des Wasser-pH-Werts). Danach wurde die Oberfläche des durchfließenden Wassers aufgrund von Sensorwerten der Wasserklarheit durch die UV-Bestrahlungseinheit 7 mit Ultraviolettlicht mit einer Wellenlänge von 266 nm und einer Intensität von circa 50 mJ/cm² bestrahlt.

Das den Heißwasserbereiter 8 auffüllende Frischwasser wurde bis zu einer Temperatur erwärmt, die die Temperatur im Becken mit den Wasserorganismen bei einem Wert von circa 27°C aufrechterhalten ließ. Danach wurde es dem Belüftungskanal 6 zugeführt. Aus dem Belüftungskanal wurde das Wasser in die Hauptpumpe 10 geleitet. Daraus wurde dank der Arbeit der erwähnten Hauptpumpe 10 gereinigtes Wasser zum Eingang des Beckens mit den Wasserorganismen verschoben. Die Förderleistung der Hauptpumpe 10 bei der Wasserzufuhr in das Becken mit den Wasserorganismen wurde so eingestellt, dass das biologisch zu reinigende Wasser nach der mechanischen Filterung mit einer Geschwindigkeit von 2,95 m³/h durch 1 m³ des Ansatzes des Nitrifikationsbiofilters 5 der Anlage mit einem geschlossenen Zyklus der Wasserversorgung zugeführt wird, die für die Ausführung des vorliegenden Verfahrens verwendet wird.

Vom Ausgang des Nitrifikationsbiofilters 5 wurde durch das Wasserregelventil 5.2.1 des Wasserablaufs 5.2 ein Teil des Wassers (in einer Menge von 8,7 m³/Tag = 10% des biologisch zu reinigenden Wasservolumens) durch die Rohrleitung in die Ablaufeinheit für Abwasser und Sedimentfraktionen aus der Einheit 30 der biologischen Wasseranreicherung, Denitrifikationsbiofilter und Nitrifikationsbiofilter abgeleitet. Dabei wurde das biologisch zu reinigende Wasservolumen durch den Wasserdurchflussmesser 5.2.2 kontrolliert.

Gleichzeitig mit dem Ablauf des biologisch zu reinigenden Wassers wurde Frischwasser in das Becken mit den Wasserorganismen in einem Volumen hinzugegeben, das dem abgeleiteten gleich ist (das heißt 8 m³/Tag).

Die notwendige Sauerstoffkonzentration im wässrigen Medium, die für die Verwirklichung des vorliegenden Verfahrens der Anlage in verwendet wird, wurde durch entsprechende Druckluftkompressoren 11 und 28 durchgeführt, und die Sauerstoffkonzentration im Wasser im Eingang des Nitrifikationsbiofilters 5 wurde auf ein Niveau von nicht weniger als 5,5 mg/l eingestellt. Aufgrund der von Sauerstoffsensoren eingehenden Information dank dem Funktionieren der Einheit 3 der biologischen Wasseranreicherung wurde die Sauerstoffkonzentration im Eingang des Nitrifikationsbiofilters 5 bei einem Wert von 0,9 mg/l aufrechterhalten.

Die notwendige Kohlendioxydkonzentration im wässrigen Medium, die für die Verwirklichung des vorliegenden Verfahrens der Anlage in verwendet wird, wurde aufgrund der Information des Kohlendioxydsensors und des ständigen Funktionierens der Nachlauf- und Steuereinheit von Wasserwerten aufrechterhalten, die die Leistung des ersten und zweiten Druckluftkompressors 11 und 28 einstellt. Durch die erwähnten Druckluftkompressoren wurde die Kohlendioxydkonzentration im Wasser im Eingang für die Wasserverschiebung im Mittel auf einen Wert von 18 mg/l eingestellt.

Nach der Reinigung des Nitrifikationsbiofilters, die bei der Anlage mit einem geschlossenen Zyklus der Wasserversorgung mit den angegebenen Werten verwendet wird, wurde das Becken mit den Wasserorganismen mit Buntbarsch (Durchschnittsgewicht von 0,4 kg und einer Dichtheit von bis zu 180 kg/m³) in einer Gesamtbiomasse von 4500 kg besetzt.

Nach der Bespannung des Beckens mit den Wasserorganismen der Anlage mit einem geschlossenen Zyklus der Wasserversorgung mit Buntbarsch mit einem Durchschnittsgewicht von 0,4 kg in einer Menge von 11250 Stück wurde die Fütterung dieser Wasserorganismen täglich durchgeführt. Die Fütterungsordnung der Wasserorganismen hat der im Beispiel 1 offenbarten Fütterungsordnung entsprochen.

Für die Effektivitätsbeurteilung des Nitrifikationsbiofilters bei den ausgewählten Durchlassbetrieben von zu reinigendem Wasser durch 1 m³ des Ansatzes und des Volumens des in das Becken mit den Wasserorganismen zugeführten Frischwassers wurde die Auswaage von 50 Stück Buntbarsch zur Bestimmung der Biomasse des Buntbarsches in diesem Becken mit den Wasserorganismen täglich durchgeführt.

Die untere Grenze des Rechenwerts der zu erwartenden Biomasse des Buntbarsches im Becken mit den Wasserorganismen nach 30 Tagen der Aufzucht in der Anlage mit einem geschlossenen Zyklus der Wasserversorgung mit dem vorliegenden Betriebsverfahren des Nitrifikationsbiofilters sollte einen Wert von 6750 kg haben.

Das erreichte Ergebnis für das vorliegende Verfahren im Zeitraum der Aufzucht des Buntbarsches im Laufe von 30 Tagen ist in der Tabelle 10 dargestellt. Das Ergebnis bei der Aufzucht der Wasserorganismen in der Anlage mit einem geschlossenen Zyklus der Wasserversorgung mit der Verwendung des Prototyp-Verfahrens für einen analogen Zeitraum betrug 6842 kg Biomasse.

**Tabelle 10**

| Bezeichnung des Verfahrens | Täglicher Zeitwert der Biomasse von Buntbarsch im Becken (Fischkasten), kg | | | | | | | | | | Biomasse von Wasserorganismen zum Ende des Zeitraumes von der Aufzucht, kg |
|---|---|---|---|---|---|---|---|---|---|---|---|
| | *1 Tag* | *2 Tag* | *3 Tag* | *4 Tag* | *5 Tag* | *6 Tag* | *7 Tag* | *8 Tag* | *9 Tag* | *10 Tag* | |
| Vorliegendes Verfahren | 4425 | 4448 | 4478 | 4515 | 4560 | 4613 | 4673 | 4740 | 4820 | 4900 | 6682 |
| | *11 Tag* | *12 Tag* | *13 Tag* | *14 Tag* | *15 Tag* | *16 Tag* | *17 Tag* | *18 Tag* | *19 Tag* | *20 Tag* | |
| | 5012 | 5124 | 5236 | 5348 | 5378 | 5423 | 5483 | 5595 | 5707 | 5819 | |
| | *21 Tag* | *22 Tag* | *23 Tag* | *24 Tag* | *25 Tag* | *26 Tag* | *27 Tag* | *28 Tag* | *29 Tag* | *30 Tag* | |
| | 5934 | 6049 | 6164 | 6279 | 6394 | 6429 | 6475 | 6532 | 6601 | 6682 | |
| | *1 Tag* | *2 Tag* | *3 Tag* | *4 Tag* | *5 Tag* | *6 Tag* | *7 Tag* | *8 Tag* | *9 Tag* | *10 Tag* | |
| Prototyp-Verfahren | 4430 | 4451 | 4479 | 4514 | 4556 | 4605 | 4661 | 4724 | 4809 | 4894 | 6842 |
| | *11 Tag* | *12 Tag* | *13 Tag* | *14 Tag* | *15 Tag* | *16 Tag* | *17 Tag* | *18 Tag* | *19 Tag* | *20 Tag* | |
| | 4991 | 5078 | 5175 | 5272 | 5311 | 5369 | 5447 | 5544 | 5631 | 5728 | |
| | *21 Tag* | *22 Tag* | *23 Tag* | *24 Tag* | *25 Tag* | *26 Tag* | *27 Tag* | *28 Tag* | *29 Tag* | *30 Tag* | |
| | 5844 | 5949 | 6065 | 6192 | 6308 | 6401 | 6505 | 6621 | 6726 | 6842 | |

Ausgehend vom Datenvergleich aus der Tabelle 10 für das vorliegende Verfahren und für das Prototyp-Verfahren gewährleistet das vorliegende Betriebsverfahren des Nitrifikationsbiofilters bei der Aufzucht von Wasserorganismen in der Anlage mit einem geschlossenen Zyklus der Wasserversorgung ein sicheres Erreichen der genannten technischen Ergebnisse.

### Beispiel 11

Die Ausführung des vorliegenden Betriebsverfahrens des Nitrifikationsbiofilters bei der Aufzucht von Wasserorganismen in der Anlage mit einem geschlossenen Zyklus der Wasserversorgung wurde im Beispiel 11 auf der Anlage durchgeführt, die im Beispiel 9 beschrieben ist. In die bekannte Anlage (Figur) waren folgende Ergänzungen eingebracht, die auch im Beispiel 9 beschrieben sind.

Das Wasservolumen im Becken mit den Wasserorganismen (Fischkasten 12) betrug 58 m³. Das Volumen des Kunststoffansatzes des Nitrifikationsbiofilters 5 betrug 10 m³. Das Gesamtwasservolumen in dem Becken mit den Wasserorganismen und dem Nitrifikationsbiofilter 5 betrug 144 m³.

Die Anlage mit einem geschlossenen Zyklus der Wasserversorgung war 16 Monate in Betrieb, und ihr Nitrifikationsbiofilter 5 wurde periodisch gereinigt. Vor der neuen Bespannung war sie auch der Reinigung unterworfen. Die Reinigungsprozedur war der im Beispiel 1 beschriebenen Reinigungsprozedur analog.

Im Belüftungskanal 6 wurde der Wasser-pH-Wert durch die Stabilisierungseinheit 9 des Wasser-pH-Werts auf einen Wert von 7,0 eingestellt (mittels einer dosierten Hinzufügung einer entsprechenden Menge an Alkali in das Wasser unter Verwendung der Stabilisierungseinheit 9 für den Wasser- pH-Wert). Danach wurde die Oberfläche des durchfließenden Wassers aufgrund von Sensorwerten der Wasserklarheit durch die UV-Bestrahlungseinheit 7 mit Ultraviolettlicht mit einer Wellenlänge von 266 nm und einer Intensität von circa 50 mJ/cm² bestrahlt.

Das den Heißwasserbereiter 8 auffüllende Frischwasser wurde bis zu einer Temperatur erwärmt, die die Temperatur im Becken mit den Wasserorganismen bei einem Wert von circa 17°C aufrechterhalten ließ. Danach wurde es dem Belüftungskanal 6 zugeführt. Aus dem Belüftungskanal wurde das Wasser in die Hauptpumpe 10 geleitet. Daraus wurde dank der Arbeit der erwähnten Hauptpumpe 10 gereinigtes Wasser zum Eingang des Beckens mit den Wasserorganismen verschoben. Die Förderleistung der Hauptpumpe 10 bei der Wasserzufuhr in das Becken mit den Wasserorganismen wurde so eingestellt, dass das biologisch zu reinigende Wasser nach der mechanischen Filterung mit einer Geschwindigkeit von 12 m³/h durch 1 m³ des Ansatzes des Nitrifikationsbiofilters 5 der Anlage mit einem geschlossenen Zyklus der Wasserversorgung zugeführt wird, die für die Ausführung des vorliegenden Verfahrens verwendet wird.

Vom Eingang des Nitrifikationsbiofilters 5 wurde durch das Wasserregelventil 5.2.1 des Wasserablaufs 5.2 ein Teil des Wassers (in einer Menge von 8,6 m³/Tag = 6% des biologisch zu reinigenden Wasservolumens) durch die Rohrleitung in die Ablaufeinheit für Abwasser und Sedimentfraktionen aus der Einheit 30 der biologischen Wasseranreicherung, Denitrifikationsbiofilter und Nitrifikationsbiofilter abgeleitet. Dabei wurde das biologisch zu reinigende Wasservolumen durch den Wasserdurchflussmesser 5.2.2 kontrolliert.

Gleichzeitig mit dem Ablauf des biologisch zu reinigenden Wassers wurde Frischwasser in das Becken mit den Wasserorganismen in einem Volumen hinzugegeben, das dem abgeleiteten gleich ist (das heißt 8 m³/Tag).

Die notwendige Sauerstoffkonzentration im wässrigen Medium, die für die Verwirklichung des vorliegenden Verfahrens der Anlage verwendet wird, wurde durch entsprechende Druckluftkompressoren 11 und 28 aufrechterhalten, und die Sauerstoffkonzentration im Wasser im Eingang des Nitrifikationsbiofilters 5 wurde auf ein Niveau von nicht weniger als 5,5 mg/l eingestellt.

Aufgrund der von Sauerstoffsensoren eingehenden Information dank dem Funktionieren der Einheit 3 der biologischen Wasseranreicherung wurde die Sauerstoffkonzentration im Eingang des Nitrifikationsbiofilters 5 bei einem Wert von 0,9 mg/l aufrechterhalten.

Die notwendige Kohlendioxydkonzentration im wässrigen Medium, die für die Verwirklichung des vorliegenden Verfahrens der Anlage verwendet wird, wurde aufgrund der Information des Kohlendioxydsensors und des ständigen Funktionierens der Nachlauf- und Steuereinheit von Wasserwerten aufrechterhalten, die die Leistung des ersten und zweiten Druckluftkompressors 11 und 28 einstellt. Durch die erwähnten Druckluftkompressoren wurde die Kohlendioxydkonzentration im Wasser im Eingang für die Wasserverschiebung im Mittel auf einen Wert von 15 mg/l eingestellt.

Nach der Reinigung des Nitrifikationsbiofilters, die bei der Anlage mit einem geschlossenen Zyklus der Wasserversorgung mit den angegebenen Werten verwendet wird, wurde das Becken mit den Wasserorganismen mit Lachs (Durchschnittsgewicht von 1,2 kg und einer Dichtheit von bis zu 60 kg/m³) mit einer Gesamtbiomasse von 3500 kg besetzt.

Nach der Bespannung des Beckens mit den Wasserorganismen der Anlage mit einem geschlossenen Zyklus der Wasserversorgung mit Lachs mit einem Durchschnittsgewicht von 1,2 kg in einer Menge von 2917 Stück wurde die Fütterung dieser Wasserorganismen täglich durchgeführt.

Die Fütterungsordnung der Wasserorganismen hat der im Beispiel 1 offenbarten Fütterungsordnung entsprochen.

Für die Effektivitätsbeurteilung des Nitrifikationsbiofilters bei den ausgewählten Durchlassbetrieben des zu reinigenden Wassers durch 1 m³ des Ansatzes und des Volumens des in das Becken mit den Wasserorganismen zugeführten Frischwassers wurde die Auswaage von 50 Stück Lachs zur Bestimmung der Biomasse des Lachses in diesem Becken mit den Wasserorganismen täglich durchgeführt.

Die untere Grenze des Rechenwerts der zu erwartenden Biomasse des Lachses im Becken mit den Wasserorganismen nach 30 Tagen der Aufzucht in der Anlage mit einem geschlossenen Zyklus der Wasserversorgung mit dem vorliegenden Betriebsverfahren des Nitrifikationsbiofilters sollte einen Wert von 4375 kg haben.

Das erreichte Ergebnis für das vorliegende Verfahren im Zeitraum der Aufzucht des Lachses im Laufe von 30 Tagen ist in der Tabelle 11 dargestellt. Das Ergebnis bei der Aufzucht der Wasserorganismen in der Anlage mit einem geschlossenen Zyklus der Wasserversorgung unter Verwendung des Prototyp-Verfahrens für einen analogen Zeitraum betrug 3615 kg Biomasse.

**Tabelle 11**

| Bezeichnung des Verfahrens | Täglicher Zeitwert der Biomasse von Lachs im Becken (Fischkasten), kg | | | | | | | | | | Biomasse von Wasserorganismen zum Ende des Zeitraumes von der Aufzucht, kg |
|---|---|---|---|---|---|---|---|---|---|---|---|
| | *1 Tag* | *2 Tag* | *3 Tag* | *4 Tag* | *5 Tag* | *6 Tag* | *7 Tag* | *8 Tag* | *9 Tag* | *10 Tag* | |
| Vorliegendes Verfahren | 3471 | 3480 | 3491 | 3506 | 3523 | 3544 | 3567 | 3593 | 3630 | 3666 | 4587 |
| | *11 Tag* | *12 Tag* | *13 Tag* | *14 Tag* | *15 Tag* | *16 Tag* | *17 Tag* | *18 Tag* | *19 Tag* | *20 Tag* | |
| | 3714 | 3762 | 3810 | 3858 | 3870 | 3888 | 3911 | 3959 | 4007 | 4055 | |
| | *21 Tag* | *22 Tag* | *23 Tag* | *24 Tag* | *25 Tag* | *26 Tag* | *27 Tag* | *28 Tag* | *29 Tag* | *30 Tag* | |
| | 4109 | 4162 | 4215 | 4268 | 4321 | 4374 | 4428 | 4481 | 4534 | 4587 | |
| | *1 Tag* | *2 Tag* | *3 Tag* | *4 Tag* | *5 Tag* | *6 Tag* | *7 Tag* | *8 Tag* | *9 Tag* | *10 Tag* | |
| Prototyp-Verfahren | 3476 | 3478 | 3482 | 3486 | 3491 | 3496 | 3503 | 3510 | 3518 | 3526 | 3615 |
| | *11 Tag* | *12 Tag* | *13 Tag* | *14 Tag* | *15 Tag* | *16 Tag* | *17 Tag* | *18 Tag* | *19 Tag* | *20 Tag* | |
| | 3538 | 3548 | 3559 | 3570 | 3574 | 3581 | 3590 | 3601 | 3611 | 3623 | |
| | *21 Tag* | *22 Tag* | *23 Tag* | *24 Tag* | *25 Tag* | *26 Tag* | *27 Tag* | *28 Tag* | *29 Tag* | *30 Tag* | |
| | 3622 | 3621 | 3620 | 3619 | 3618 | 3618 | 3617 | 3616 | 3615 | 3615 | |

Ausgehend vom Datenvergleich aus der Tabelle 11 für das vorliegende Verfahren und für das Prototyp-Verfahren gewährleistet das vorliegende Betriebsverfahren des Nitrifikationsbiofilters bei der Aufzucht von Wasserorganismen in der Anlage mit einem geschlossenen Zyklus der Wasserversorgung ein sicheres Erreichen der genannten technischen Ergebnisse.

### Beispiel 12

Das vorliegende Betriebsverfahrens des Nitrifikationsbiofilters bei der Aufzucht von Wasserorganismen in der Anlage mit einem geschlossenen Zyklus der Wasserversorgung wurde im Beispiel 12 auf der Anlage in der Figur durchgeführt, die im Beispiel 9 beschrieben ist. In die bekannte Anlage (Figur) waren folgende Ergänzungen eingebracht, die auch im Beispiel 9 beschrieben sind.

Das Wasservolumen im Becken mit den Wasserorganismen betrug 105 m³. Das Volumen des Kunststoffansatzes des Nitrifikationsbiofilter 5 betrug 15 m³. Das Gesamtwasservolumen in dem Becken mit den Wasserorganismen und dem Nitrifikationsbiofilter 5 betrug 186 m³.

Die Anlage mit einem geschlossenen Zyklus der Wasserversorgung war 16 Monate in Betrieb, und ihr Nitrifikationsbiofilter 5 wurde periodisch gereinigt. Vor der neuen Bespannung war sie auch der Reinigung unterworfen. Die Reinigungsprozedur war der im Beispiel 1 beschriebenen Reinigungsprozedur analog.

Im oben erwähnten Belüftungskanal 6 wurde der Wasser-pH-Wert durch die Stabilisierungseinheit 9 für den Wasser-pH-Wert auf einen Wert von 7,0 eingestellt (mittels einer dosierten Hinzufügung einer entsprechenden Menge an Alkali in das Wasser unter Verwendung der Stabilisierungseinheit 9 für den Wasser-pH-Wert). Danach wurde die Oberfläche des durchfließenden Wassers aufgrund von Sensorwerten der Wasserklarheit durch die UV-Bestrahlungseinheit 7 mit Ultraviolettlicht mit einer Wellenlänge von 266 nm und einer Intensität von circa 50 mJ/cm² bestrahlt.

Das den Heißwasserbereiter 8 auffüllende Frischwasser wurde bis zu einer Temperatur erwärmt, die die Temperatur im Becken mit den Wasserorganismen bei einem Wert von circa 26°C aufrechterhalten ließ. Danach wurde es dem Belüftungskanal 6 zugeführt. Aus dem Belüftungskanal wurde das Wasser in die Hauptpumpe 10 geleitet. Daraus wurde dank der Arbeit der erwähnten Hauptpumpe 10 gereinigtes Wasser zum Eingang des Beckens mit den Wasserorganismen verschoben. Die Förderleistung der Hauptpumpe 10 bei der Wasserzufuhr in das Becken mit den Wasserorganismen wurde so eingestellt, dass das biologisch zu reinigende Wasser nach der mechanischen Filterung mit einer Geschwindigkeit von 17 m³/h durch 1 m³ des Ansatzes des Nitrifikationsbiofilters 5 der Anlage mit einem geschlossenen Zyklus der Wasserversorgung zugeführt wird, die für die Ausführung des vorliegenden Verfahrens verwendet wird.

Vom Eingang des Nitrifikationsbiofilters 5 wurde durch das Wasserregelventil 5.2.1 des Wasserablaufs 5.2 ein Teil des Wassers (in einer Menge von 13 m³/Tag = 7% des biologisch zu reinigenden Wasservolumens) durch die Rohrleitung in die Ablaufeinheit für Abwasser und Sedimentfraktionen aus der Einheit 30 der biologischen Wasseranreicherung, Denitrifikationsbiofilter und Nitrifikationsbiofilter abgeleitet. Dabei wurde das biologisch zu reinigende Wasservolumen durch den Wasserdurchflussmesser 5.2.2 kontrolliert.

Gleichzeitig mit dem Ablauf des biologisch zu reinigenden Wassers wurde Frischwasser in das Becken mit den Wasserorganismen in einem Volumen hinzugegeben, das dem abgeleiteten gleich ist (das heißt 13 m³/Tag).

Die notwendige Sauerstoffkonzentration im wässrigen Medium, die für die Verwirklichung des vorliegenden Verfahrens der Anlage verwendet wird, wurde durch entsprechende Druckluftkompressoren 11 und 28 aufrechterhalten, und die Sauerstoffkonzentration im Wasser im Eingang des Nitrifikationsbiofilters 5 wurde auf ein Niveau von nicht weniger als 5,5 mg/l eingestellt. Aufgrund der von Sauerstoffsensoren eingehenden Information dank dem Funktionieren der Einheit 3 der biologischen Wasseranreicherung wurde die Sauerstoffkonzentration im Eingang des Nitrifikationsbiofilters 5 bei einem Wert von 0,9 mg/l aufrechterhalten.

Die notwendige Kohlendioxydkonzentration im wässrigen Medium, die für die Verwirklichung des vorliegenden Verfahrens der Anlage verwendet wird, wurde aufgrund der Information des Kohlendioxydsensors und des ständigen Funktionierens der Nachlauf- und Steuereinheit von Wasserwerten aufrechterhalten, die die Leistung des ersten und zweiten Druckluftkompressors 11 und 28 einstellt. Durch die erwähnten Druckluftkompressoren wurde die Kohlendioxydkonzentration im Wasser im Eingang für die Wasserverschiebung im Mittel bei einem Wert von 15 mg/l eingestellt.

Nach der Reinigung des Nitrifikationsbiofilters, die bei der Anlage mit einem geschlossenen Zyklus der Wasserversorgung mit den angegebenen Werten verwendet wird, wurde das Becken mit den Wasserorganismen mit Hausen (Durchschnittsgewicht von 3,2 kg und einer Dichtheit bis zu 65 kg/m³) mit einer Gesamtbiomasse von 6800 kg besetzt.

Nach der Bespannung des Beckens mit den Wasserorganismen der Anlage mit einem geschlossenen Zyklus der Wasserversorgung mit Hausen mit einem Durchschnittsgewicht von 3,2 kg in einer Menge von 2125 Stück wurde die Fütterung dieser Wasserorganismen täglich durchgeführt. Die Fütterungsordnung der Wasserorganismen hat der im Beispiel 1 offenbarten Fütterungsordnung entsprochen.

Für die Effektivitätsbeurteilung des Nitrifikationsbiofilters bei den ausgewählten Durchlassbetrieben des zu reinigenden Wassers durch 1 m³ des Ansatzes und des Volumens des in das Becken mit den Wasserorganismen zugeführten Frischwassers wurde die Auswaage von 50 Stück Hausen zur Bestimmung der Biomasse der Hausen in diesem Becken mit den Wasserorganismen täglich durchgeführt.

Die untere Grenze des Rechenwerts der zu erwartenden Biomasse der Hausen im Becken mit den Wasserorganismen nach 30 Tagen der Aufzucht in der Anlage mit einem geschlossenen Zyklus der Wasserversorgung mit dem vorliegenden Betriebsverfahren des Nitrifikationsbiofilters sollte einen Wert von 8288 kg haben.

Das erreichte Ergebnis für das vorliegende Verfahren im Zeitraum der Aufzucht der Hausen im Laufe von 30 Tagen ist in der Tabelle 12 dargestellt. Das Ergebnis bei der Aufzucht von Wasserorganismen in der Anlage mit einem geschlossenen Zyklus der Wasserversorgung unter Verwendung des Prototyp-Verfahrens für einen analogen Zeitraum betrug 6221 kg Biomasse.

**Tabelle 12**

| Bezeichnung des Verfahrens | Täglicher Zeitwert der Biomasse von Hausen im Becken (Fischkasten), kg | | | | | | | | | | Biomasse von Wasserorganismen zum Ende des Zeitraumes von der Aufzucht, kg |
|---|---|---|---|---|---|---|---|---|---|---|---|
| | *1 Tag* | *2 Tag* | *3 Tag* | *4 Tag* | *5 Tag* | *6 Tag* | *7 Tag* | *8 Tag* | *9 Tag* | *10 Tag* | |
| Vorliegendes Verfahren | 6750 | 6765 | 6785 | 6810 | 6840 | 6874 | 6914 | 6959 | 7023 | 7088 | 8580 |
| | *11 Tag* | *12 Tag* | *13 Tag* | *14 Tag* | *15 Tag* | *16 Tag* | *17 Tag* | *18 Tag* | *19 Tag* | *20 Tag* | |
| | 7167 | 7247 | 7327 | 7406 | 7426 | 7456 | 7495 | 7575 | 7655 | 7734 | |
| | *21 Tag* | *22 Tag* | *23 Tag* | *24 Tag* | *25 Tag* | *26 Tag* | *27 Tag* | *28 Tag* | *29 Tag* | *30 Tag* | |
| | 7819 | 7903 | 7988 | 8073 | 8157 | 8242 | 8326 | 8411 | 8495 | 8580 | |
| | *1 Tag* | *2 Tag* | *3 Tag* | *4 Tag* | *5 Tag* | *6 Tag* | *7 Tag* | *8 Tag* | *9 Tag* | *10 Tag* | |
| Prototyp-Verfahren | 6755 | 6757 | 6759 | 6761 | 6764 | 6767 | 6771 | 6775 | 6779 | 6784 | 6221 |
| | *11 Tag* | *12 Tag* | *13 Tag* | *14 Tag* | *15 Tag* | *16 Tag* | *17 Tag* | *18 Tag* | *19 Tag* | *20 Tag* | |
| | 6762 | 6743 | 6722 | 6700 | 6692 | 6679 | 6662 | 6640 | 6621 | 6600 | |
| | *21 Tag* | *22 Tag* | *23 Tag* | *24 Tag* | *25 Tag* | *26 Tag* | *27 Tag* | *28 Tag* | *29 Tag* | *30 Tag* | |
| | 6560 | 6525 | 6485 | 6442 | 6403 | 6371 | 6336 | 6296 | 6261 | 6221 | |

Ausgehend vom Datenvergleich aus der Tabelle 12 für das vorliegende Verfahren und für das Prototyp-Verfahren gewährleistet das vorliegende Betriebsverfahren des Nitrifikationsbiofilters bei der Aufzucht von Wasserorganismen in der Anlage mit einem geschlossenen Zyklus der Wasserversorgung ein sicheres Erreichen der angegebenen technischen Ergebnisse

### Beispiel 13

Das vorliegende Betriebsverfahrens des Nitrifikationsbiofilters bei der Aufzucht von Wasserorganismen in der Anlage mit einem geschlossenen Zyklus der Wasserversorgung wurde im Beispiel 13 auf der Anlage in der Figur durchgeführt, die im Beispiel 9 beschrieben ist. In die oben erwähnte Anlage (Figur) waren folgende Ergänzungen angebracht, die auch im Beispiel 9 beschrieben sind.

Das Wasservolumen im Becken mit den Wasserorganismen betrug 131 m³. Das Volumen des Kunststoffansatzes des Nitrifikationsbiofilter 5 betrug 13 m³. Das Gesamtwasservolumen im Becken mit den Wasserorganismen und dem Nitrifikationsbiofilter 5 betrug 242 m³.

Die Anlage mit einem geschlossenen Zyklus der Wasserversorgung war 14 Monate in Betrieb, und ihr Nitrifikationsbiofilter 5 wurde periodisch gereinigt. Vor der neuen Bespannung war sie auch der Reinigung unterworfen. Die Reinigungsprozedur war der im Beispiel 1 beschriebenen Reinigungsprozedur analog.

Im Belüftungskanal 6 wurde der Wasser-pH-Wert durch die Stabilisierungseinheit 9 für den Wasser-pH-Wert auf einen Wert von 7,0 eingestellt (mittels einer dosierten Hinzufügung einer entsprechenden Menge an Alkali in das Wasser unter Verwendung der Stabilisierungseinheit 9 für den Wasser-pH-Wert). Danach wurde die Oberfläche des durchfließenden Wassers aufgrund von Sensorwerten der Wasserklarheit durch die UV-Bestrahlungseinheit 7 mit Ultraviolettlicht mit einer Wellenlänge von 266 nm und einer Intensität von circa 50 mJ/cm² bestrahlt.

Das den Heißwasserbereiter 8 auffüllende Frischwasser wurde bis zu einer Temperatur erwärmt, die die Temperatur im Becken mit den Wasserorganismen bei einem Wert von circa 26°C aufrechterhalten ließ. Danach wurde es dem Belüftungskanal 6 zugeführt. Aus dem Belüftungskanal wurde das Wasser in die Hauptpumpe 10 geleitet. Daraus wurde dank der Arbeit der erwähnten Hauptpumpe 10 gereinigtes Wasser zum Eingang des Beckens mit den Wasserorganismen verschoben. Die Förderleistung der Hauptpumpe 10 bei der Wasserzufuhr in das Becken mit den Wasserorganismen wurde so eingestellt, dass das biologisch zu reinigende Wasser nach der mechanischen Filterung mit einer Geschwindigkeit von 23 m³/h durch 1 m³ des Ansatzes des Nitrifikationsbiofilters 5 der Anlage mit einem geschlossenen Zyklus der Wasserversorgung zugeführt wird, die für die Ausführung des vorliegenden Verfahrens verwendet wird.

Vom Eingang des Nitrifikationsbiofilters 5 wurde durch das Wasserregelventil 5.2.1 des Wasserablaufs 5.2 ein Teil des Wassers (in einer Menge von 18,2 m³/Tag = 7,5% des biologisch zu reinigenden Wasservolumens) durch die Rohrleitung in die Ablaufeinheit für Abwasser und Sedimentfraktionen aus der Einheit 30 der biologischen Wasseranreicherung, Denitrifikationsbiofilter und Nitrifikationsbiofilter abgeleitet. Dabei wurde das biologisch zu reinigende Wasservolumen durch den Wasserdurchflussmesser 5.2.2 kontrolliert.

Gleichzeitig mit dem Ablauf des biologisch zu reinigenden Wassers wurde Frischwasser in das Becken mit den Wasserorganismen in einem Volumen hinzugegeben, das dem abgeleiteten gleich ist (das heißt 18,2 m³/Tag).

Die notwendige Sauerstoffkonzentration im wässrigen Medium, die für die Verwirklichung des vorliegenden Verfahrens der Anlage verwendet wird, wurde durch entsprechende Druckluftkompressoren 11 und 28 aufrechterhalten, und die Sauerstoffkonzentration im Wasser im Eingang des Nitrifikationsbiofilters 5 wurde auf ein Niveau von nicht weniger als 5,5 mg/l eingestellt. Aufgrund der von Sauerstoffsensoren eingehenden Information dank dem Funktionieren der Einheit 3 der biologischen Wasseranreicherung wurde die Sauerstoffkonzentration im Eingang des Nitrifikationsbiofilters 5 bei einem Wert von 0,9 mg/l aufrechterhalten.

Die notwendige Kohlendioxydkonzentration im wässrigen Medium, die für die Verwirklichung des vorliegenden Verfahrens der Anlage verwendet wird, wurde aufgrund der Information des Kohlendioxydsensors und des ständigen Funktionierens der Nachlauf- und Steuereinheit von Wasserwerten aufrechterhalten, die die Leistung des ersten und zweiten Druckluftkompressors 11 und 28 einstellt. Durch die erwähnten Druckluftkompressoren wurde die Kohlendioxydkonzentration im Wasser im Eingang für die Wasserverschiebung im Mittel auf einen Wert von 15 mg/l eingestellt.

Nach der Reinigung des Nitrifikationsbiofilters, die bei der Anlage mit einem geschlossenen Zyklus der Wasserversorgung mit den angegebenen Werten verwendet wird, wurde das Becken mit den Wasserorganismen mit Kalugahausen (Durchschnittsgewicht von 4,6 kg und einer Dichtheit bis zu 55 kg/m³) mit einer Gesamtbiomasse von 7200 kg besetzt.

Nach der Bespannung des Beckens mit den Wasserorganismen der Anlage mit einem geschlossenen Zyklus der Wasserversorgung mit Kalugahausen mit einem Durchschnittsgewicht von 4,6 kg in einer Menge von 1565 Stück wurde die Fütterung dieser Wasserorganismen täglich durchgeführt. Die Fütterungsordnung der Wasserorganismen hat der im Beispiel 1 offenbarten Fütterungsordnung entsprochen.

Für die Effektivitätsbeurteilung des Nitrifikationsbiofilters bei den ausgewählten Durchlassbetrieben des zu reinigenden Wassers durch 1 m³ des Ansatzes und des Volumens des in das Becken mit den Wasserorganismen zugeführten Frischwassers wurde eine Auswaage von 30 Stück Kalugahausen zur Bestimmung der Biomasse der Kalugahausen in diesem Becken mit den Wasserorganismen täglich durchgeführt.

Die untere Grenze des Rechenwerts der zu erwartenden Biomasse der Kalugahausen im Becken mit den Wasserorganismen nach 30 Tagen der Aufzucht in der Anlage mit einem geschlossenen Zyklus der Wasserversorgung mit dem vorliegenden Betriebsverfahren des Nitrifikationsbiofilters sollte einen Wert von 7983 kg haben.

Das erreichte Ergebnis für das vorliegende Verfahren im Zeitraum der Aufzucht von Kalugahausen im Laufe von 30 Tagen ist in der Tabelle 13 dargestellt.

Das Ergebnis bei der Aufzucht der Wasserorganismen in der Anlage mit einem geschlossenen Zyklus der Wasserversorgung unter der Verwendung des Prototyp-Verfahrens für einen analogen Zeitraum betrug 5038 kg Biomasse.

**Tabelle 13**

| Bezeichnung des Verfahrens | Täglicher Zeitwert der Biomasse von Kalugahausen im Becken (Fischkasten), kg | | | | | | | | | | Biomasse von Wasserorqanismen zum Ende des Zeitraumes von der Aufzucht 30 Tage, kg |
|---|---|---|---|---|---|---|---|---|---|---|---|
| | *1 Tag* | *2 Tag* | *3 Tag* | *4 Tag* | *5 Tag* | *6 Tag* | *7 Tag* | *8 Tag* | *9 Tag* | *10 Tag* | |
| Vorliegendes Verfahren | 7174 | 7182 | 7192 | 7205 | 7221 | 7239 | 7260 | 7283 | 7320 | 7356 | 8182 |
| | *11 Tag* | *12 Tag* | *13 Tag* | *14 Tag* | *15 Tag* | *16 Tag* | *17 Tag* | *18 Tag* | *19 Tag* | *20 Tag* | |
| | 7400 | 7444 | 7488 | 7532 | 7542 | 7558 | 7579 | 7623 | 7667 | 7711 | |
| | *21 Tag* | *22 Tag* | *23 Tag* | *24 Tag* | *25 Tag* | *26 Tag* | *27 Tag* | *28 Tag* | *29 Tag* | *30 Tag* | |
| | 7758 | 7805 | 7852 | 7900 | 7947 | 7994 | 8041 | 8088 | 8135 | 8182 | |
| | *1 Tag* | *2 Tag* | *3 Tag* | *4 Tag* | *5 Tag* | *6 Tag* | *7 Tag* | *8 Tag* | *9 Tag* | *10 Tag* | |
| Prototyp-Verfahren | 7179 | 7175 | 7169 | 7162 | 7154 | 7144 | 7133 | 7120 | 7107 | 7093 | 5038 |
| | *11 Tag* | *12 Tag* | *13 Tag* | *14 Tag* | *15 Tag* | *16 Tag* | *17 Tag* | *18 Tag* | *19 Tag* | *20 Tag* | |
| | 7008 | 6931 | 6846 | 6761 | 6728 | 6677 | 6609 | 6524 | 6447 | 6362 | |
| | *21 Tag* | *22 Tag* | *23 Tag* | *24 Tag* | *25 Tag* | *26 Tag* | *27 Tag* | *28 Tag* | *29 Tag* | *30 Tag* | |
| | 6224 | 6100 | 5962 | 5811 | 5673 | 5563 | 5438 | 5300 | 5176 | 5038 | |

Ausgehend vom Datenvergleich aus der Tabelle 13 für das vorliegende Verfahren und für das Prototyp-Verfahren gewährleistet das vorliegende Betriebsverfahren des Nitrifikationsbiofilters bei der Aufzucht von Wasserorganismen in der Anlage mit einem geschlossenen Zyklus der Wasserversorgung ein sicheres Erreichen der genannten technischen Ergebnisse.

### Beispiel 14

Das vorliegende Betriebsverfahren des Nitrifikationsbiofilters bei der Aufzucht von Wasserorganismen in der Anlage mit einem geschlossenen Zyklus der Wasserversorgung wurde im Beispiel 14 auf der Anlage (Figur) durchgeführt, die im Beispiel 9 beschrieben ist. In die oben erwähnte Anlage (Figur) waren folgende Ergänzungen angebracht, die auch im Beispiel 9 beschrieben sind.

Das Wasservolumen im Becken mit den Wasserorganismen betrug 116 m³. Das Volumen des Kunststoffansatzes des Nitrifikationsbiofilter 5 betrug 15 m³. Das Gesamtwasservolumen in dem Becken mit den Wasserorganismen und dem Nitrifikationsbiofilter 5 betrug 192 m³. Die Anlage mit einem geschlossenen Zyklus der Wasserversorgung war 18 Monate in Betrieb, und ihr Nitrifikationsbiofilter 5 wurde periodisch gereinigt. Vor der neuen Bespannung war sie auch der Reinigung unterworfen. Die Reinigungsprozedur war der im Beispiel 1 beschriebenen Reinigungsprozedur analog.

Im Belüftungskanal 6 wurde der Wasser-pH-Wert durch die Stabilisierungseinheit 9 für den Wasser-pH-Wert auf einen Wert von 7,0 eingestellt (mittels einer dosierten Hinzufügung einer entsprechenden Menge an Alkali in das Wasser unter Verwendung der Stabilisierungseinheit 9 für den Wasser-pH-Wert). Danach wurde die Oberfläche des durchfließenden Wassers aufgrund von Sensorwerten der Wasserklarheit durch die UV-Bestrahlungseinheit 7 mit Ultraviolettlicht mit einer Wellenlänge von 266 nm und einer Intensität von circa 50 mJ/cm² bestrahlt.

Das den Heißwasserbereiter 8 auffüllende Frischwasser wurde bis zu einer Temperatur erwärmt, die die Temperatur im Becken mit den Wasserorganismen bei einem Wert von circa 25°C aufrechterhalten ließ, und dann wurde es dem Belüftungskanal 6 zugeführt. Aus dem Belüftungskanal wurde das Wasser in die Hauptpumpe 10 geleitet. Daraus wurde dank der Arbeit der erwähnten Hauptpumpe 10 gereinigtes Wasser zum Eingang des Beckens mit den Wasserorganismen verschoben. Die Förderleistung der Hauptpumpe 10 bei der Wasserzufuhr in das Becken mit den Wasserorganismen wurde so eingestellt, dass das biologisch zu reinigende Wasser nach der mechanischen Filterung mit einer Geschwindigkeit von 28 m³/h durch 1 m³ des Ansatzes des Nitrifikationsbiofilters 5 der Anlage mit einem geschlossenen Zyklus der Wasserversorgung zugeführt wird, die für die Ausführung des vorliegenden Verfahrens verwendet wird.

Vom Eingang des Nitrifikationsbiofilters 5 wurde durch das Wasserregelventil 5.2.1 des Wasserablaufs 5.2 ein Teil des Wassers (in einer Menge von 11,3 m³/Tag = 5,9% des biologisch zu reinigenden Wasservolumens) durch die Rohrleitung in die Ablaufeinheit für Abwasser und Sedimentfraktionen aus der Einheit 30 der biologischen Wasseranreicherung, Denitrifikationsbiofilter und Nitrifikationsbiofilter abgeleitet. Dabei wurde das biologisch zu reinigende Wasservolumen durch den Wasserdurchflussmesser 5.2.2 kontrolliert.

Gleichzeitig mit dem Ablauf des biologisch zu reinigenden Wassers wurde Frischwasser in das Becken mit den Wasserorganismen in einem Volumen hinzugegeben, das dem abgeleiteten gleich ist (das heißt 11,3 m³/Tag).

Die notwendige Sauerstoffkonzentration im wässrigen Medium, die für die Verwirklichung des vorliegenden Verfahrens der Anlage verwendet wird, wurde durch entsprechende Druckluftkompressoren 11 und 28 aufrechterhalten, und die Sauerstoffkonzentration im Wasser im Eingang des Nitrifikationsbiofilters 5 wurde auf ein Niveau von nicht weniger als 5,5 mg/l eingestellt. Aufgrund der von Sauerstoffsensoren eingehenden Information dank dem Funktionieren der Einheit 3 der biologischen Wasseranreicherung wurde die Sauerstoffkonzentration im Eingang des Nitrifikationsbiofilters 5 bei einem Wert von 0,9 mg/l aufrechterhalten.

Die notwendige Kohlendioxydkonzentration im wässrigen Medium, die für die Verwirklichung des vorliegenden Verfahrens der Anlage verwendet wird, wurde aufgrund der Information des Kohlendioxydsensors und des ständigen Funktionierens der Nachlauf- und Steuereinheit von Wasserwerten aufrechterhalten, die die Leistung des ersten und zweiten Druckluftkompressors 11 und 28 einstellt. Durch die erwähnten Druckluftkompressoren wurde die Kohlendioxydkonzentration im Wasser im Eingang für die Wasserverschiebung im Mittel auf einen Wert von 15 mg/l eingestellt.

Nach der Reinigung des Nitrifikationsbiofilters, die bei der Anlage mit einem geschlossenen Zyklus der Wasserversorgung mit den angegebenen Werten verwendet wird, wurde das Becken mit den Wasserorganismen mit Sterlet (Durchschnittsgewicht von 0,8 kg und einer Dichtheit bis zu 45 kg/m³) mit einer Gesamtbiomasse von 5200 kg besetzt.

Nach der Bespannung des Beckens mit den Wasserorganismen der Anlage mit einem geschlossenen Zyklus der Wasserversorgung mit Sterlet mit einem Durchschnittsgewicht von 0,8 kg in einer Menge von 6500 Stück wurde die Fütterung dieser Wasserorganismen täglich durchgeführt. Die Fütterungsordnung der Wasserorganismen hat der im Beispiel 1 offenbarten Fütterungsordnung entsprochen.

Für die Effektivitätsbeurteilung des Nitrifikationsbiofilters bei den ausgewählten Durchlassbetrieben des zu reinigenden Wassers durch 1 m³ des Ansatzes und des Volumens des in das Becken mit den Wasserorganismen zugeführten Frischwassers wurde die Auswaage von 50 Stück Sterlet zur Bestimmung der Biomasse der Sterlets in diesem Becken mit den Wasserorganismen täglich durchgeführt.

Die untere Grenze des Rechenwerts der zu erwartenden Biomasse der Sterlets im Becken mit den Wasserorganismen nach 30 Tagen der Aufzucht in der Anlage mit einem geschlossenen Zyklus der Wasserversorgung mit dem vorliegenden Betriebsverfahren des Nitrifikationsbiofilters sollte einen Wert von 6500 kg haben.

Das erreichte Ergebnis für das vorliegende Verfahren im Zeitraum der Aufzucht von Sterlets im Laufe von 30 Tagen ist in der Tabelle 14 dargestellt.

Das Ergebnis bei der Aufzucht der Wasserorganismen in der Anlage mit einem geschlossenen Zyklus der Wasserversorgung unter Verwendung des Prototyp-Verfahrens für einen analogen Zeitraum betrug 3332 kg Biomasse.

**Tabelle 14**

| Bezeichnung des Verfahrens | Täglicher Zeitwert der Biomasse von Sterlets im Becken (Fischkasten), kg | | | | | | | | | | Biomasse von Wasserorganismen zum Ende des Zeitraumes von der Aufzucht 30 Tage, kg |
|---|---|---|---|---|---|---|---|---|---|---|---|
| | *1 Tag* | *2 Tag* | *3 Tag* | *4 Tag* | *5 Tag* | *6 Tag* | *7 Tag* | *8 Tag* | *9 Tag* | *10 Tag* | |
| Vorliegendes Verfahren | 5157 | 5170 | 5187 | 5209 | 5235 | 5265 | 5300 | 5339 | 5392 | 5445 | 6605 |
| | *11 Tag* | *12 Tag* | *13 Tag* | *14 Tag* | *15 Tag* | *16 Tag* | *17 Tag* | *18 Tag* | *19 Tag* | *20 Tag* | |
| | 5504 | 5562 | 5620 | 5679 | 5696 | 5722 | 5757 | 5815 | 5873 | 5932 | |
| | *21 Tag* | *22 Tag* | *23 Tag* | *24 Tag* | *25 Tag* | *26 Tag* | *27 Tag* | *28 Tag* | *29 Tag* | *30 Tag* | |
| | 5999 | 6066 | 6134 | 6201 | 6268 | 6336 | 6403 | 6470 | 6538 | 6605 | |
| | *1 Tag* | *2 Tag* | *3 Tag* | *4 Tag* | *5 Tag* | *6 Tag* | *7 Tag* | *8 Tag* | *9 Tag* | *10 Tag* | |
| Prototyp-Verfahren | 5162 | 5154 | 5143 | 5130 | 5114 | 5095 | 5074 | 5050 | 5023 | 4996 | 3332 |
| | *11 Tag* | *12 Tag* | *13 Tag* | *14 Tag* | *15 Tag* | *16 Tag* | *17 Tag* | *18 Tag* | *19 Tag* | *20 Tag* | |
| | 4911 | 4834 | 4748 | 4662 | 4628 | 4577 | 4508 | 4422 | 4345 | 4260 | |
| | *21 Tag* | *22 Tag* | *23 Tag* | *24 Tag* | *25 Tag* | *26 Tag* | *27 Tag* | *28 Tag* | *29 Tag* | *30 Tag* | |
| | 4163 | 4076 | 3979 | 3873 | 3776 | 3699 | 3612 | 3515 | 3428 | 3332 | |

Ausgehend vom Datenvergleich aus der Tabelle 14 für das vorliegende Verfahren und für das Prototyp-Verfahren gewährleistet das vorliegende Betriebsverfahren des Nitrifikationsbiofilters bei der Aufzucht von Wasserorganismen in der Anlage mit einem geschlossenen Zyklus der Wasserversorgung ein sicheres Erreichen der genannten technischen Ergebnisse.

### Beispiel 15

Das vorliegende Betriebsverfahren des Nitrifikationsbiofilters bei der Aufzucht von Wasserorganismen in der Anlage mit einem geschlossenen Zyklus der Wasserversorgung wurde im vorliegenden Beispiel auf der Anlage (Figur) durchgeführt, die im Beispiel 9 beschrieben ist. In die oben erwähnte Anlage (Figur) waren folgende Ergänzungen eingebracht, die auch im Beispiel 9 beschrieben sind.

Das Wasservolumen im Becken mit den Wasserorganismen betrug 166 m³. Das Volumen des Kunststoffansatzes des Nitrifikationsbiofilters 5 betrug 17 m³. Das Gesamtwasservolumen in dem Becken mit den Wasserorganismen und dem Nitrifikationsbiofilter 5 betrug 291 m³.

Die Anlage mit einem geschlossenen Zyklus der Wasserversorgung war 15 Monate in Betrieb, und ihr Nitrifikationsbiofilter 5 wurde periodisch gereinigt. Vor der neuen Bespannung war sie auch der Reinigung unterworfen. Die Reinigungsprozedur war der im Beispiel 1 beschriebenen Reinigungsprozedur analog.

Im Belüftungskanal 6 wurde der Wasser-pH-Wert durch die Stabilisierungseinheit 9 für den Wasser-pH-Wert auf einen Wert von 7,0 eingestellt (mittels einer dosierten Hinzufügung einer entsprechenden Menge an Alkali in das Wasser durch die Verwendung der Stabilisierungseinheit. Danach wurde die Oberfläche des durchfließenden Wassers aufgrund von Sensorwerten der Wasserklarheit durch die UV-Bestrahlungseinheit 7 mit Ultraviolettlicht mit einer Wellenlänge von 266 nm und einer Intensität von circa 50 mJ/cm² bestrahlt.

Das den Heißwasserbereiter 8 auffüllende Frischwasser wurde bis zu einer Temperatur erwärmt, die die Temperatur im Becken mit den Wasserorganismen bei einem Wert von circa 27°C aufrechterhalten ließ, und danach wurde es dem Belüftungskanal 6 zugeführt. Aus dem Belüftungskanal wurde das Wasser in die Hauptpumpe 10 geleitet. Daraus wurde dank der Arbeit der erwähnten Hauptpumpe 10 gereinigtes Wasser zum Eingang des Beckens mit den Wasserorganismen verschoben. Die Förderleistung der Hauptpumpe 10 bei der Wasserzufuhr in das Becken mit den Wasserorganismen wurde so eingestellt, dass das biologisch zu reinigende Wasser nach der mechanischen Filterung mit einer Geschwindigkeit von 28,05 m³/Stunde durch 1 m³ des Ansatzes des Nitrifikationsbiofilters 5 der Anlage mit einem geschlossenen Zyklus der Wasserversorgung zugeführt wird, die für die Ausführung des vorliegenden Verfahrens verwendet wird.

Vom Eingang des Nitrifikationsbiofilters 5 wurde durch das Wasserregelventil 5.2.1 des Wasserablaufs 5.2 ein Teil des Wassers (in einer Menge von 26,2 m³/Tag = 9% des biologisch zu reinigenden Wasservolumens) durch eine Rohrleitung in die Ablaufeinheit für Abwasser und Sedimentfraktionen aus der Einheit 30 der biologischen Wasseranreicherung, Denitrifikationsbiofilter und Nitrifikationsbiofilter abgeleitet. Dabei wurde das biologisch zu reinigende Wasservolumen durch den Wasserdurchflussmesser 5.2.2 kontrolliert.

Gleichzeitig mit dem Ablauf des biologisch zu reinigenden Wassers wurde Frischwasser in das Becken mit den Wasserorganismen mit einem Volumen hinzugegeben, das dem abgeleiteten gleich ist (das heißt 26,2 m³/Tag).

Die notwendige Sauerstoffkonzentration im wässrigen Medium, die für die Verwirklichung des vorgeschlagenen Verfahrens der Anlage verwendet wird, wurde durch entsprechende Druckluftkompressoren 11 und 28 aufrechterhalten, und die Sauerstoffkonzentration im Wasser im Eingang des Nitrifikationsbiofilters 5 wurde auf ein Niveau von nicht weniger als 5,5 mg/l eingestellt. Aufgrund der von Sauerstoffsensoren eingehenden Information dank dem Funktionieren vom Block der biologischen Wasseranreicherung 3 wurde die Sauerstoffkonzentration im Eingang des Nitrifikationsbiofilters 5 bei einem Wert von 0,9 mg/l aufrechterhalten.

Die notwendige Kohlendioxydkonzentration im wässrigen Medium, die für die Verwirklichung des vorliegenden Verfahrens der Anlage verwendet wird, wurde aufgrund der Information des Kohlendioxydsensors und des ständigen Funktionierens der Nachlauf- und Steuereinheit von Wasserwerten aufrechterhalten, die die Leistung des ersten und des zweiten Druckluftkompressors 11 und 28 einstellt. Durch die erwähnten Druckluftkompressoren wurde die Kohlendioxydkonzentration im Wasser im Eingang für die Wasserverschiebung im Mittel bei einem Wert von 18 mg/l eingestellt.

Nach der Reinigung des Nitrifikationsbiofilters, die bei der Anlage mit einem geschlossenen Zyklus der Wasserversorgung mit den angegebenen Werten verwendet wird, wurde das Becken mit den Wasserorganismen mit russischem Stör (Durchschnittsgewicht von 3,5 kg und einer Dichtheit von bis zu 58 kg/m³) in einer Gesamtbiomasse von 9600 kg besetzt.

Nach der Bespannung des Beckens mit den Wasserorganismen der Anlage mit einem geschlossenen Zyklus der Wasserversorgung mit russischem Stör mit einem Durchschnittsgewicht von 3,5 kg in einer Menge von 2743 Stück wurde die Fütterung dieser Wasserorganismen täglich durchgeführt. Die Fütterungsordnung der Wasserorganismen hat der im Beispiel 1 offenbarten Fütterungsordnung entsprochen.

Für die Effektivitätsbeurteilung des Nitrifikationsbiofilters bei den ausgewählten Durchlassbetrieben des zu reinigenden Wassers durch 1 m³ des Ansatzes und des Volumens des in das Becken mit den Wasserorganismen zugeführten Frischwassers wurde eine Auswaage von 30 Stück russischen Störs zur Bestimmung der Biomasse des russischen Störs in diesem Becken mit den Wasserorganismen täglich durchgeführt.

Die untere Grenze des Rechenwerts der zu erwartenden Biomasse russischen Störs im Becken mit den Wasserorganismen nach 30 Tagen der Aufzucht in der Anlage mit einem geschlossenen Zyklus der Wasserversorgung mit dem vorliegenden Betriebsverfahren des Nitrifikationsbiofilters sollte einen Wert von 10560 kg haben.

Das erreichte Ergebnis für das vorliegende Verfahren im Zeitraum der Aufzucht von russischem Stör im Laufe von 30 Tagen ist in der Tabelle 15 dargestellt.

Das Ergebnis bei der Aufzucht der Wasserorganismen in der Anlage mit einem geschlossenen Zyklus der Wasserversorgung unter Verwendung des Prototyp-Verfahrens für einen analogen Zeitraum betrug 5264 kg Biomasse.

**Tabelle 15**

| Bezeichnung des Verfahrens | Täglicher Zeitwert der Biomasse von russischem Stör im Becken (Fischkasten), kg | | | | | | | | | | Biomasse von Wasserorganismen zum Ende des Zeitraumes von der Aufzucht 30 Tage, kg |
|---|---|---|---|---|---|---|---|---|---|---|---|
| | *1 Tag* | *2 Tag* | *3 Tag* | *4 Tag* | *5 Tag* | *6 Tag* | *7 Tag* | *8 Tag* | *9 Tag* | *10 Tag* | |
| Vorliegendes Verfahren | 9568 | 9578 | 9590 | 9606 | 9626 | 9648 | 9674 | 9702 | 9741 | 9780 | 10498 |
| | *11 Tag* | *12 Tag* | *13 Tag* | *14 Tag* | *15 Tag* | *16 Tag* | *17 Tag* | *18 Tag* | *19 Tag* | *20 Tag* | |
| | 9825 | 9870 | 9915 | 9960 | 9973 | 9992 | 10018 | 10063 | 10108 | 10153 | |
| | *21 Tag* | *22 Tag* | *23 Tag* | *24 Tag* | *25 Tag* | *26 Tag* | *27 Tag* | *28 Tag* | *29 Tag* | *30 Tag* | |
| | 10199 | 10245 | 10291 | 10337 | 10383 | 10397 | 10415 | 10438 | 10466 | 10498 | |
| | *1 Tag* | *2 Tag* | *3 Tag* | *4 Tag* | *5 Tag* | *6 Tag* | *7 Tag* | *8 Tag* | *9 Tag* | *10 Tag* | |
| Prototyp- - Verfahren | 9573 | 9569 | 9564 | 9557 | 9550 | 9541 | 9530 | 9518 | 9505 | 9492 | 5264 |
| | *11 Tag* | *12 Tag* | *13 Tag* | *14 Tag* | *15 Tag* | *16 Tag* | *17 Tag* | *18 Tag* | *19 Tag* | *20 Tag* | |
| | 9266 | 9063 | 8837 | 8611 | 8521 | 8385 | 8204 | 7978 | 7775 | 7549 | |
| | *21 Tag* | *22 Tag* | *23 Tag* | *24 Tag* | *25 Tag* | *26 Tag* | *27 Tag* | *28 Tag* | *29 Tag* | *30 Tag* | |
| | 7311 | 7097 | 6859 | 6597 | 6359 | 6168 | 5954 | 5716 | 5502 | 5264 | |

Ausgehend vom Datenvergleich aus der Tabelle 15 für das vorliegende Verfahren und für das Prototyp-Verfahren gewährleistet das vorliegende Betriebsverfahren des Nitrifikationsbiofilters bei der Aufzucht von Wasserorganismen in der Anlage mit einem geschlossenen Zyklus der Wasserversorgung ein sicheres Erreichen der genannten technischen Ergebnisse.

### Beispiel 16

Das vorliegende Betriebsverfahrens des Nitrifikationsbiofilters bei der Aufzucht von Wasserorganismen in der Anlage mit einem geschlossenen Zyklus der Wasserversorgung wurde im Beispiel 16 auf der Anlage (Figur) durchgeführt, die im Beispiel 9 beschrieben ist. In die oben erwähnte Anlage (Figur) waren folgende Ergänzungen eingebracht, die auch im Beispiel 9 beschrieben sind.

Das Wasservolumen im Becken mit den Wasserorganismen betrug 98 m³. Das Volumen des Kunststoffansatzes des Nitrifikationsbiofilters 5 betrug 13 m³. Das Gesamtwasservolumen in dem Becken mit den Wasserorganismen und dem Nitrifikationsbiofilter 5 betrug 191 m³.

Die Anlage mit einem geschlossenen Zyklus der Wasserversorgung war 12 Monate in Betrieb, und ihr Nitrifikationsbiofilter 5 wurde periodisch gereinigt. Vor der neuen Bespannung war sie auch der Reinigung unterworfen. Die Reinigungsprozedur war der im Beispiel 1 beschriebenen Reinigungsprozedur analog.

Im Belüftungskanal 6 wurde der Wasser-pH-Wert durch die Stabilisierungseinheit 9 für den Wasser-pH-Wert auf einen Wert von 7,0 eingestellt (mittels einer dosierten Hinzufügung einer entsprechenden Menge an Alkali durch die Verwendung der Stabilisierungseinheit 9 für den Wasser-pH-Wert). Danach wurde die Oberfläche des durchfließenden Wassers aufgrund von Sensorwerten der Wasserklarheit durch die UV-Bestrahlungseinheit 7 mit Ultraviolettlicht mit einer Wellenlänge von 266 nm und einer Intensität von circa 50 mJ/cm² bestrahlt.

Das den Heißwasserbereiter 8 auffüllende Frischwasser wurde bis zu einer Temperatur erwärmt, die die Temperatur im Becken mit den Wasserorganismen bei einem Wert von circa 24°C aufrechterhalten ließ, und danach wurde es dem Belüftungskanal 6 zugeführt. Aus dem Belüftungskanal wurde das Wasser in die Hauptpumpe 10 geleitet. Daraus wurde dank der Arbeit der erwähnten Hauptpumpe 10 gereinigtes Wasser zum Eingang des Beckens mit den Wasserorganismen verschoben. Die Förderleistung der Hauptpumpe 10 bei der Wasserzufuhr in das Becken mit den Wasserorganismen wurde so eingestellt, dass das biologisch zu reinigende Wasser nach der mechanischen Filterung mit einer Geschwindigkeit von 16 m³/h durch 1 m³ des Ansatzes des Nitrifikationsbiofilters 5 der Anlage mit einem geschlossenen Zyklus der Wasserversorgung zugeführt wird, die für die Ausführung des vorliegenden Verfahrens verwendet wird.

Vom Eingang des Nitrifikationsbiofilters 5 wurde durch das Wasserregelventil 5.2.1 des Wasserablaufs 5.2 ein Teil des Wassers (in einer Menge von 9,6 m³/Tag = 5% des biologisch zu reinigenden Wasservolumens) durch eine Rohrleitung in die Ablaufeinheit für Abwasser und Sedimentfraktionen aus der Einheit 30 der biologischen Wasseranreicherung, Denitrifikationsbiofilter und Nitrifikationsbiofilter abgeleitet. Dabei wurde das biologisch zu reinigende Wasservolumen durch den Wasserdurchflussmesser 5.2.2 kontrolliert.

Gleichzeitig mit dem Ablauf des biologisch zu reinigenden Wassers wurde Frischwasser in das Becken mit den Wasserorganismen mit einem Volumen hinzugegeben, das dem abgeleiteten gleich ist (das heißt 9,6 m³/Tag).

Die notwendige Sauerstoffkonzentration im wässrigen Medium, die für die Verwirklichung des vorliegenden Verfahrens der Anlage verwendet wird, wurde durch entsprechende Druckluftkompressoren 11 und 28 aufrechterhalten, und die Sauerstoffkonzentration im Wasser im Eingang des Nitrifikationsbiofilters 5 wurde auf ein Niveau von nicht weniger als 5,5 mg/l eingestellt. Aufgrund der von Sauerstoffsensoren eingehenden Information dank dem Funktionieren der Einheit 3 der biologischen Wasseranreicherung wurde die Sauerstoffkonzentration im Eingang des Nitrifikationsbiofilters 5 bei einem Wert von 0,9 mg/l aufrechterhalten.

Die notwendige Kohlendioxydkonzentration im wässrigen Medium, die für die Verwirklichung des vorliegenden Verfahrens der Anlage verwendet wird, wurde aufgrund der Information eines Kohlendioxydsensors und des ständigen Funktionierens der Nachlauf- und Steuereinheit von Wasserwerten aufrechterhalten, die die Leistung des ersten und zweiten Druckluftkompressors 11 und 28 einstellt. Durch die erwähnten Druckluftkompressoren wurde die Kohlendioxydkonzentration im Wasser im Eingang für die Wasserverschiebung im Mittel auf einen Wert von 15 mg/l eingestellt.

Nach der Reinigung des Nitrifikationsbiofilters, die bei der Anlage mit einem geschlossenen Zyklus der Wasserversorgung mit den angegebenen Werten verwendet wird, wurde das Becken mit den Wasserorganismen mit Lena-Stör (Durchschnittsgewicht von 2,8 kg und einer Dichtheit von bis zu 42 kg/m³) mit einer Gesamtbiomasse von 4100 kg besetzt.

Nach der Bespannung des Beckens mit den Wasserorganismen der Anlage mit einem geschlossenen Zyklus der Wasserversorgung mit Lena-Stör mit einem Durchschnittsgewicht von 2,8 kg in einer Menge von 1464 Stück wurde die Fütterung dieser Wasserorganismen täglich durchgeführt. Die Fütterungsordnung der Wasserorganismen hat der im Beispiel 1 offenbarten Fütterungsordnung entsprochen.

Für die Effektivitätsbeurteilung des Nitrifikationsbiofilters bei den ausgewählten Durchlassbetrieben des zu reinigenden Wassers durch 1 m³ des Ansatzes und des Volumens des in das Becken mit den Wasserorganismen zugeführten Frischwassers wurde eine Auswaage von 30 Stück Lena-Stör zur Bestimmung der Biomasse des Lena-Störs in diesem Becken mit den Wasserorganismen täglich durchgeführt.

Die untere Grenze des Rechenwerts der zu erwartenden Biomasse des Lena-Störs im Becken mit den Wasserorganismen nach 30 Tagen der Aufzucht in der Anlage mit einem geschlossenen Zyklus der Wasserversorgung mit dem vorliegenden Betriebsverfahren des Nitrifikationsbiofilters sollte einen Wert von 4466 kg haben.

Das erreichte Ergebnis für das vorliegende Verfahren im Zeitraum der Aufzucht von Lena-Stör im Laufe von 30 Tagen ist in der Tabelle 16 dargestellt.

Das Ergebnis bei der Aufzucht von Wasserorganismen in der Anlage mit einem geschlossenen Zyklus der Wasserversorgung unter Verwendung des Prototyp-Verfahrens für einen analogen Zeitraum betrug 3195 kg Biomasse.

**Tabelle 16**

| Bezeichnung des Verfahrens | Täglicher Zeitwert der Biomasse von Lena-Stör im Becken (Fischkasten), kg | | | | | | | | | | Biomasse von Wasserorganismen zum Ende des Zeitraumes von der Aufzucht 30 Tage, kg |
|---|---|---|---|---|---|---|---|---|---|---|---|
| | *1 Tag* | *2 Tag* | *3 Tag* | *4 Tag* | *5 Tag* | *6 Tag* | *7 Tag* | *8 Tag* | *9 Tag* | *10 Tag* | |
| Vorliegendes Verfahren | 4088 | 4089 | 4090 | 4091 | 4093 | 4094 | 4095 | 4096 | 4099 | 4101 | 4430 |
| | *11 Tag* | *12 Tag* | *13 Tag* | *14 Tag* | *15 Tag* | *16 Tag* | *17 Tag* | *18 Tag* | *19 Tag* | *20 Tag* | |
| | 4112 | 4123 | 4134 | 4145 | 4146 | 4148 | 4149 | 4160 | 4171 | 4182 | |
| | *21 Tag* | *22 Tag* | *23 Tag* | *24 Tag* | *25 Tag* | *26 Tag* | *27 Tag* | *28 Tag* | *29 Tag* | *30 Tag* | |
| | 4207 | 4232 | 4257 | 4281 | 4306 | 4331 | 4356 | 4381 | 4406 | 4430 | |
| | *1 Tag* | *2 Tag* | *3 Tag* | *4 Tag* | *5 Tag* | *6 Tag* | *7 Tag* | *8 Tag* | *9 Tag* | *10 Tag* | |
| Prototyp-Verfahren | 4093 | 4087 | 4080 | 4070 | 4059 | 4046 | 4031 | 4014 | 3995 | 3976 | 3195 |
| | *11 Tag* | *12 Tag* | *13 Tag* | *14 Tag* | *15 Tag* | *16 Tag* | *17 Tag* | *18 Tag* | *19 Tag* | *20 Tag* | |
| | 3937 | 3903 | 3864 | 3825 | 3809 | 3786 | 3755 | 3716 | 3681 | 3643 | |
| | *21 Tag* | *22 Tag* | *23 Tag* | *24 Tag* | *25 Tag* | *26 Tag* | *27 Tag* | *28 Tag* | *29 Tag* | *30 Tag* | |
| | 3602 | 3565 | 3517 | 3464 | 3416 | 3378 | 3335 | 3287 | 3243 | 3195 | |

Ausgehend vom Datenvergleich aus der Tabelle 16 für das vorliegende Verfahren und für das Prototyp-Verfahren gewährleistet das vorliegende Betriebsverfahren des Nitrifikationsbiofilters bei der Aufzucht von Wasserorganismen in der Anlage mit einem geschlossenen Zyklus der Wasserversorgung ein sicheres Erreichen der genannten technischen Ergebnisse.

Für die Realisierung des vorliegenden Betriebsverfahrens des Nitrifikationsbiofilters bei der Aufzucht von Wasserorganismen in der Anlage mit einem geschlossenen Zyklus der Wasserversorgung können vom Stand der Technik bekannte Anlagen, Stoffe und Konstruktionen verwendet werden.

### Bezugszeichenliste

- 1: Stabilisationswasserkasten
- 2: Einheit der mechanischen Filterung
- 3: Einheit der biologischen Wasseranreicherung
- 4: Denitrifikationsbiofilter
- 5: Nitrifikationsbiofilter
- 5.2: Wasserablauf
- 5.2.1: Wasserregelventil
- 5.2.2: Wasserdurchflussmesser
- 6: Belüftungskanal
- 7: UV-Bestrahlungseinheit
- 8: Heißwasserbereiter
- 9: Stabilisierungseinheit des Wasser-pH-Werts
- 10: Hauptpumpe
- 11: Erster Druckluftkompressor
- 12: Erster Fischkasten
- 12.1: Rohrleitung
- 12.1.1: Wasserregelventil
- 12.1.2: Wasserdurchflussmesser
- 27: Reservewasserkasten
- 28: Zweiter Druckluftkompressor
- 29: Zulaufeinheit von Frischwasser
- 30: Ablaufeinheit für Abwasser und Sedimentfraktionen aus der Einheit der biologischen Wasseranreicherung, Denitrifikationsbiofilter und Nitrifikationsbiofilter
- 31: Erster Schütz
- 32: Zweiter Schütz
- 33: Dritter Schütz
- 34: Schichtenautomatikeinheit
- 35: Nachlauf- und Steuereinheit von Wasserwerten
- 36: Entleerungspumpe von Sedimentfraktionen aus der Einheit der biologischen Wasseranreicherung, Denitrifikationsbiofilter und Nitrifikationsbiofilter

## Patentansprüche

1. Betriebsverfahren eines Nitrifikationsbiofilters bei der Aufzucht von Wasserorganismen in einer Anlage mit einem geschlossenen Zyklus der Wasserversorgung,
**gekennzeichnet durch**
- eine Zufuhr von biologisch zu reinigendem Wasser in den Nitrifikationsbiofilter aus einem Becken mit Wasserorganismen nach einer mechanischen Filterung mit einer Geschwindigkeit von 3-28 m³/h durch 1 m³ eines Ansatzes des Biofilters,
- einen Ablauf vom Eingang oder Ausgang des Nitrifikationsbiofilters von einem Teil des biologisch zu reinigenden Wasservolumens und
- die Hinzufügung von Frischwasser in das Becken mit den Wasserorganismen, das dem abgeleiteten Volumen gleich ist.

2. Betriebsverfahren eines Nitrifikationsbiofilters nach Anspruch 1,
**dadurch gekennzeichnet,**
**dass** der Ablauf vom Eingang oder Ausgang des Nitrifikationsbiofilters von einem Teil des biologisch zu reinigenden Wasservolumens im Laufe von einem Tag mehr als 5% des Gesamtwasservolumens beträgt, das sich im Becken mit den Wasserorganismen und dem Nitrifikationsbiofilter befindet.
